# EUROPEAN PATENT APPLICATION

(11) **EP 4 620 725 A1**
(43) Date of publication of application: **24.09.2025**
(21) Application number: 23890241.5
(22) Date of filing: 03.07.2023
(51) Int. Cl.: B60L 53/302, B60L 53/16

(54) **TERMINAL APPARATUS AND POWER SUPPLY SYSTEM**

(30) Priority: 15.11.2022 CN 202211427241
(71) Applicant: Huawei Digital Power Technologies Co., Ltd., Shenzhen, Guangdong 518043 (CN)
(72) Inventor: LIAN, Zhisheng, Shenzhen, Guangdong 518043 (CN); YANG, Taixin, Shenzhen, Guangdong 518043 (CN); HAN, Xinru, Shenzhen, Guangdong 518043 (CN)
(74) Representative: Isarpatent
(86) International application number: PCT/CN2023/105532
(87) International publication number: WO 2024/103799

(57) **Abstract**

This application provides a terminal device and a power supply system. The terminal device includes a housing, a power distribution device, a charging component, and a cooling component. The housing includes a first accommodating cavity and a second accommodating cavity, and the first accommodating cavity and the second accommodating cavity are sequentially arranged in a first direction and spaced apart. The power distribution device is accommodated in the first accommodating cavity. The charging component includes a connector, the connector is partially located outside the housing, partially inserted into the first accommodating cavity, and electrically connected to the power distribution device. The cooling component includes a cooling source and a cooling hose, the cooling source is accommodated in the second accommodating cavity, the cooling hose includes a first section, a second section, and a middle section, the middle section is connected between the first section and the second section, the first section and the second section are folded via the middle section, both an end of the first section and an end of the second section are fastened to the cooling source and penetrate into the second accommodating cavity from the first accommodating cavity, and the middle section extends into the connector.

## Description

This application claims priority to Chinese Patent Application No. 202211427241.5, filed with the China National Intellectual Property Administration on November 15, 2022 and entitled "TERMINAL DEVICE AND POWER SUPPLY SYSTEM", which is incorporated herein by reference in its entirety.

### TECHNICAL FIELD

This application relates to the field of electrical devices, and in particular, to a terminal device and a power supply system.

### BACKGROUND

With the rapid development of the electric vehicle market, construction of power supply systems matching electric vehicles also develops rapidly. A power unit device of the power supply system provides a charging service for the electric vehicle via a terminal device. Currently, to achieve a charge-and-go goal of the electric vehicle, a current provided by the terminal device for the electric vehicle is increasingly large, and charging efficiency of the terminal device is increasingly high. However, as the current provided by the terminal device for the electric vehicle and the charging efficiency increase, the existing terminal device has low heat dissipation efficiency, and a heat dissipation capability of the terminal device cannot meet a requirement.

### SUMMARY

This application provides a terminal device and a power supply system. The terminal device is used in the power supply system. For the foregoing technical problem, according to the terminal device and the power supply system provided in this application, heat dissipation efficiency is greatly improved, a heat dissipation capability is improved, environment tolerance is improved, and a service life is prolonged while ensuring high charging efficiency for the terminal device and the power supply system.

According to a first aspect, an embodiment of this application provides a terminal device. The terminal device includes a housing, a power distribution device, a charging component, and a cooling component. The housing includes a first accommodating cavity and a second accommodating cavity, and the first accommodating cavity and the second accommodating cavity are sequentially arranged in a first direction and spaced apart. The power distribution device is accommodated in the first accommodating cavity. The charging component includes a connector, the connector is partially located outside the housing, partially inserted into the first accommodating cavity, and electrically connected to the power distribution device. The cooling component includes a cooling source and a cooling hose, the cooling source is accommodated in the second accommodating cavity, the cooling hose includes a first section, a second section, and a middle section, the middle section is connected between the first section and the second section, the first section and the second section are folded via the middle section, both an end of the first section and an end of the second section are fastened to the cooling source and penetrate into the second accommodating cavity from the first accommodating cavity, and the middle section extends into the connector.

In the terminal device provided in embodiments of this application, a charging direct current (high current) output by a power unit device may be transmitted to an electric vehicle, to implement fast charging on the electric vehicle. The power distribution device may be electrically connected to the power unit device, and the connector may be connected to the electric vehicle. The power unit device may output the charging direct current (high current) to the power distribution device, and the charging direct current is transmitted from the power distribution device to the electric vehicle through the connector to implement fast charging. In a working process of the terminal device, because the power distribution device and the connector transmit the charging direct current (high current), it is very likely that the power distribution device and the connector quickly generate a large amount of heat. As a result, temperatures of the connector and the power distribution device rise excessively fast. According to the terminal device provided in embodiments of this application, coolant may flow in the cooling hose, the cooling source may perform heat dissipation for the coolant, and the heat dissipated by the connector may be absorbed via the coolant, so that fast heat dissipation can be implemented for the connector, thereby facilitating fast heat dissipation for the power distribution device. This helps improve heat dissipation efficiency of the terminal device, and greatly improves a heat dissipation capability of the terminal device.

In addition, the first accommodating cavity and the second accommodating cavity are sequentially arranged and spaced apart, the power distribution device is accommodated in the first accommodating cavity, and the cooling source is accommodated in the second accommodating cavity. In this way, on one hand, the cooling source and the power distribution device are independent of each other and do not affect each other. This helps improve stability of an internal structure of the terminal device, and helps improve performance of the terminal device. On the other hand, the power distribution device can be raised. When an external environment changes (for example, when a flood disaster occurs), a risk of a short circuit of the power distribution device can be delayed. This helps improve use safety of the terminal device, helps improve environmental weather resistance of the terminal device, and helps prolong a service life of the terminal device. In addition, in such a design, the internal structure is simple and space utilization is high, which facilitates a miniaturization design of the terminal device.

In a possible implementation, the housing is provided with a through hole, the through hole is in communication with the first accommodating cavity, a hole axis of the through hole extends in a second direction, the connector includes a first connection section, the first connection section passes through the through hole, and the cooling hose extends into the connector from an end face of the first connection section. The second direction is perpendicular to the first direction.

In this way, because the through hole is in communication with the first accommodating cavity, the first connection section of the connector passes through the through hole, so that the first connection section of the connector can be raised. Weight of the connector may be shared via the housing, so that a user can operate the connector to connect to the electric vehicle, and the operation is convenient.

In a possible implementation, the housing is provided with a baffle plate, the baffle plate is disposed in the first accommodating cavity, and in the second direction, the baffle plate is located between the power distribution device and the cooling hose.

The power distribution device and the cooling hose are spaced apart via the baffle plate. A design of the baffle plate can avoid a short circuit caused by sputtering of the coolant to the power distribution device due to leakage that is of the coolant flowing in the cooling hose and that is caused by damage of the cooling hose and the like. This helps improve safety of the terminal device and prolong the service life of the terminal device.

In a possible implementation, the terminal device includes a first terminal and a second terminal, both the first terminal and the second terminal are connected to the power distribution device, the first terminal and the second terminal are accommodated in the first accommodating cavity, in the first direction, the first terminal and the second terminal are spaced apart and are both located on a side that is of the baffle plate and that faces away from the second accommodating cavity, a first power cable and a second power cable are disposed in the connector, both the first power cable and the second power cable extend out from the end face of the first connection section, the first power cable is connected to the first terminal, and the second power cable is connected to the second terminal.

The first power cable is connected to the first terminal, the second power cable is connected to the second terminal, and the connector is electrically connected to the power distribution device. The charging direct current transmitted from the power distribution device may be transmitted to the connector via the power cable, and then transmitted to the electric vehicle via the connector, to implement fast charging on the electric vehicle.

In a possible implementation, the housing includes a main housing and a cover plate, the cover plate is rotatably connected to a side of the main housing, the main housing includes a first accommodating groove and a second accommodating groove, the first accommodating groove and the second accommodating groove are spaced apart in the first direction, the cover plate and the main housing are able to be stacked in a third direction, the cover plate covers the first accommodating groove to form the first accommodating cavity, and the cover plate covers the second accommodating groove to form the second accommodating cavity. The third direction is perpendicular to the first direction and the second direction.

A design in which the cover plate is rotatably connected to the main housing not only facilitates mounting of the housing, but also prevents a component accommodated in the housing from being exposed outside the housing, thereby improving safety of the component accommodated in the housing, prolonging the service life of the terminal device, and improving aesthetics of the terminal device. In addition, both the cover plate and the main housing may be configured to mount another component of the terminal device. This not only greatly improves space utilization of the housing, but also facilitates maintenance and replacement of the component accommodated in the housing. This further helps reduce thickness of the housing, thereby facilitating a miniaturization design of the housing.

In a possible implementation, the main housing is provided with a first air vent and a second air vent. In the second direction, the first air vent and the second air vent are spaced apart and opposite to each other, and are both in communication with the second accommodating groove. Hole axes of both the first air vent and the second air vent extend in the second direction.

When the cover plate covers the second accommodating groove of the main housing to form the second accommodating cavity, the second accommodating cavity is exposed outside the housing through the first air vent and the second air vent. External cold air may flow into the second accommodating cavity from the first air vent, and flow out of the second accommodating cavity via the cooling source through the second air vent, to implement fast heat dissipation for the cooling source, thereby improving the heat dissipation capability of the terminal device. The external cold air may alternatively flow into the second accommodating cavity from the second air vent, and flow out of the second accommodating cavity via the cooling source through the first air vent, to implement fast heat dissipation for the cooling source, thereby improving the heat dissipation capability of the terminal device.

In a possible implementation, the main housing is provided with a third air vent, and a hole axis of the third air vent extends in the third direction and is in communication with the second accommodating groove.

When the cover plate covers the second accommodating groove of the main housing to form the second accommodating cavity, the second accommodating cavity is exposed outside the housing through the first air vent, the second air vent, and the third air vent. The external cold air may flow into the second accommodating cavity from the first air vent and the second air vent, and flow out of the second accommodating cavity via the cooling source through the third air vent, to implement fast heat dissipation for the cooling source, thereby improving the heat dissipation capability of the terminal device.

The main housing is provided with a third air vent, the cover plate is provided with a fourth air vent, a hole axis of the third air vent extends in the third direction and is in communication with the second accommodating groove, in the third direction, the fourth air vent and the third air vent are able to be spaced apart and opposite to each other, and a hole axis of the fourth air vent extends in the third direction and is in communication with the second accommodating cavity.

When the cover plate covers the second accommodating groove of the main housing to form the second accommodating cavity, in the third direction, the fourth air vent and the third air vent are spaced apart and opposite to each other, and the hole axis of the fourth air vent extends in the third direction and is in communication with the second accommodating groove, that is, in communication with the second accommodating cavity. The second accommodating cavity is exposed outside the housing through the third air vent and the fourth air vent. The external cold air may flow into the second accommodating cavity from the fourth air vent, and flow out of the second accommodating cavity via the cooling source through the third air vent, to implement fast heat dissipation for the cooling source, thereby improving the heat dissipation capability of the terminal device.

In a possible implementation, the first accommodating groove includes a mating groove surface, the power distribution device is fastened to the mating groove surface, the terminal device includes a heat dissipation member, and the heat dissipation member is accommodated in the first accommodating cavity, and is spaced apart apart from the power distribution device.

Heat dissipation may be performed for the power distribution device via the heat dissipation member. This helps eliminate a local hot spot of an internal component of the terminal device, facilitates even heat dissipation for the terminal device, and ensures an even temperature inside the terminal device.

In a possible implementation, the heat dissipation member is fastened to the cover plate, and in the third direction, projection of the heat dissipation member accommodated in the first accommodating cavity overlaps projection of the power distribution device.

A design in which the heat dissipation member is fastened to the cover plate not only prevents the heat dissipation member from occupying space of the first accommodating groove of the main housing, but also greatly improves the space utilization of the housing, facilitates the miniaturization design of the housing, and facilitates maintenance of the heat dissipation member. In addition, when the cover plate covers the first accommodating groove of the main housing to form the first accommodating cavity, the heat dissipation member fastened to the cover plate is accommodated in the second accommodating cavity. Because in the third direction, the projection of the heat dissipation member accommodated in the first accommodating cavity overlaps the projection of the power distribution device, the heat dissipation member can be raised. When the external environment changes (for example, when the flood disaster occurs), a risk of a short circuit of the heat dissipation member can be delayed. This helps improve the use safety of the terminal device, helps improve the environmental weather resistance of the terminal device, and helps prolong the service life of the terminal device.

In a possible implementation, the heat dissipation member is fastened to the mating groove surface, and in the first direction, the heat dissipation member is located on a side that is of the power distribution device and that faces away from the second accommodating groove.

Because the heat dissipation member is fastened to the mating groove surface, and the heat dissipation member is accommodated in the first accommodating groove of the main housing, the heat dissipation member can be raised. When the external environment changes (for example, when the flood disaster occurs), a risk of a short circuit of the heat dissipation member can be delayed. This helps improve the use safety of the terminal device, helps improve the environmental weather resistance of the terminal device, and helps prolong the service life of the terminal device.

In a possible implementation, the baffle plate is disposed on the mating groove surface, the heat dissipation member is fastened to the mating groove surface, in the first direction, the heat dissipation member is located on a side that is of the power distribution device and that faces the second accommodating groove, and in the second direction, the heat dissipation member is located on a side that is of the baffle plate and that faces the power distribution device, and is spaced apart apart from the baffle plate.

Because the heat dissipation member is fastened to the mating groove surface, and the heat dissipation member is accommodated in the first accommodating groove of the main housing, the heat dissipation member can be raised. When the external environment changes (for example, when the flood disaster occurs), a risk of a short circuit of the heat dissipation member can be delayed. This helps improve the use safety of the terminal device, helps improve the environmental weather resistance of the terminal device, and helps prolong the service life of the terminal device.

In a possible implementation, the terminal device includes a control circuit board, the control circuit board is electrically connected to the power distribution device, the cooling source, and the heat dissipation member, and the control circuit board is fastened to the mating groove surface.

Alternatively, the control circuit board is fastened to the cover plate, and the control circuit board is accommodated in the first accommodating cavity.

In this way, because the control circuit board is accommodated in the first accommodating cavity, the control circuit board can be raised. When the external environment changes (for example, when the flood disaster occurs), a risk of a short circuit of the control circuit board can be delayed. This helps improve the use safety of the terminal device, helps improve the environmental weather resistance of the terminal device, and helps prolong the service life of the terminal device. In addition, a design in which the control circuit board is fastened to the cover plate can prevent the control circuit board from occupying the space of the first accommodating groove of the main housing, help reduce a height (a size in a Y-axis direction) of the main housing, help reduce heights of the housing and the terminal device, and facilitate the miniaturization designs of the housing and the terminal device.

In a possible implementation, the cooling component includes an auxiliary power supply, the auxiliary power supply is fastened to the cover plate, the auxiliary power supply is accommodated in the first accommodating cavity, and the auxiliary power supply is electrically connected to the cooling source, the control circuit board, and the heat dissipation member.

The auxiliary power supply may output an output direct current (low-voltage current) to supply the direct current to the cooling source, the heat dissipation member, and the control circuit board. When the cover plate covers the first accommodating groove of the main housing to form the first accommodating cavity, the auxiliary power supply is accommodated in the first accommodating cavity. Because the auxiliary power supply is accommodated in the first accommodating cavity, the auxiliary power supply can be raised. When the external environment changes (for example, when the flood disaster occurs), a risk of a short circuit of the auxiliary power supply can be delayed. This helps improve the use safety of the terminal device, helps improve the environmental weather resistance of the terminal device, and helps prolong the service life of the terminal device. In addition, a design in which the auxiliary power supply is fastened to the cover plate prevents the auxiliary power supply from occupying the space of the main housing, thereby greatly improving the space utilization of the housing, facilitating the miniaturization designs of the housing and the terminal device, and facilitating maintenance of the auxiliary power supply.

In a possible implementation, the cooling component includes an auxiliary circuit board, the auxiliary circuit board is fastened to the cover plate, the auxiliary circuit board is accommodated in the first accommodating cavity, and the auxiliary circuit board is electrically connected to the cooling source and the auxiliary power supply.

The auxiliary power supply may be electrically connected to the cooling source via the auxiliary circuit board, and the auxiliary circuit board may be configured to control the cooling source to work. When the cover plate covers the first accommodating groove of the main housing to form the first accommodating cavity, the auxiliary power supply is accommodated in the first accommodating cavity. Because the auxiliary circuit board is fastened to the cover plate, a design of the auxiliary circuit board not only facilitates a miniaturization design of the cooling source, but also prevents the auxiliary circuit board from occupying the space of the main housing, thereby greatly improving the space utilization of the housing, and facilitating the miniaturization designs of the housing and the terminal device.

In a possible implementation, the connector includes an accommodating hose and a connector base, the accommodating hose includes the first connection section and a second connection section, the second connection section is fastened to the first connection section, and the connector base is connected to the second connection section.

The connector may accommodate the power cable via the accommodating hose. Because the power cable is connected to the connector base, the connector base may be connected to the electric vehicle, and the charging direct current (high current) transmitted from the power distribution device to the connector may be transmitted to the electric vehicle via the connector base, to implement fast charging on the electric vehicle.

In a possible implementation, the main housing is provided with the through hole, the through hole is in communication with the first accommodating groove, in the second direction, the first connection section that passes through the through hole is mounted on one side of the main housing, and the connector base is mounted on the other side of the main housing.

Alternatively, the connector base is mounted on a side that is of the main housing and that is provided with the through hole.

Alternatively, the connector base is mounted on the cover plate.

Because in the second direction, the first connection section passes through and is mounted on the one side of the main housing, and the connector base is mounted on the other side of the main housing, the accommodating hose may be wound around the housing. In this way, on one hand, this helps increase a length of the accommodating hose, and is convenient for an operator to hold the connector base to connect to the electric vehicle. On the other hand, this helps reduce a contact area between the accommodating hose and the ground, avoids severe wear of the accommodating hose, helps prolong a service life of the accommodating hose, and further helps prolong a service life of the connector.

Because in the second direction, the first connection section passes through and is mounted on the one side of the main housing, and the connector base is mounted on the side that is of the main housing and that is provided with the through hole, in the second direction, the first connection section of the accommodating hose and the connector base are located on a same side of the housing, and the accommodating hose is not wound around the housing. In this way, on one hand, this is convenient for an operator to hold the connector base to connect to the electric vehicle. On the other hand, this avoids that the accommodating hose interferes with rotation of the cover plate relative to the main housing, thereby facilitating maintenance and repair of the terminal device by the user.

Because in the second direction, the first connection section passes through and is mounted on the one side of the main housing, and the connector base is mounted on the cover plate, the first connection section of the accommodating hose and the connector base are located on two adjacent sides of the housing, and the accommodating hose is not wound around the housing. In this way, on one hand, this helps increase a length of the accommodating hose, and is convenient for an operator to hold the connector base to connect to the electric vehicle. On the other hand, this helps reduce a contact area between the accommodating hose and the ground, avoids severe wear of the accommodating hose, helps prolong a service life of the accommodating hose, and further helps prolong a service life of the connector.

In a possible implementation, the terminal device includes a third terminal, a fourth terminal, and a fifth terminal that are accommodated in the first accommodating cavity, both the third terminal and the fourth terminal are connected to the power distribution device, both the third terminal and the fourth terminal are located on a side that is of the power distribution device and that faces the second accommodating cavity, the fifth terminal is fastened to the housing, and the fifth terminal is located on a side that is of the power distribution device and that faces the third terminal and the fourth terminal, and is spaced apart apart from the power distribution device.

According to a second aspect, an embodiment of this application further provides a power supply system. The power supply system includes a power unit device, a cable component, and the terminal device according to any one of the possible implementations of the first aspect. The cable component is connected to the power unit device and a power distribution component of the terminal device, and the power unit device is configured to provide a charging direct current for the terminal device.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a block diagram of a structure of a power supply system in cooperation with an electric vehicle according to an embodiment of this application;
FIG. 2 is a diagram of a structure of a terminal device in a closed state in a case of the terminal device of the power supply system shown in FIG. 1 being in cooperation with a cable component;
FIG. 3 is a diagram of a three-dimensional structure of a terminal device in an open state in a case of the terminal device shown in FIG. 2 being in cooperation with a cable component;
FIG. 4 is a diagram of a three-dimensional structure of a housing of the terminal device shown in FIG. 3 in an open state;
FIG. 5 is a diagram of a structure of the housing shown in FIG. 4 in a closed state;
FIG. 6 is a sectional view of the housing shown in FIG. 5 cut along a line L1-L1;
FIG. 7 is a diagram of a three-dimensional structure of the terminal device shown in FIG. 3 with a charging component, a cooling component, and an auxiliary component omitted in a case of the terminal device being in cooperation with a cable component;
FIG. 8 is a diagram of a three-dimensional structure of a power distribution component of the terminal device shown in FIG. 3;
FIG. 9 is a diagram of three-dimensional structures of a charging component and a cooling component of the terminal device shown in FIG. 3;
FIG. 10 is a block diagram of a structure of a cooling source in cooperation with a cooling hose of the cooling component shown in FIG. 9;
FIG. 11 is a sectional view of the terminal device shown in FIG. 2 cut along a line L2-L2;
FIG. 12 is a sectional view of the terminal device shown in FIG. 2 cut along a line L2-L2 according to another embodiment;
FIG. 13 is a sectional view of the terminal device shown in FIG. 2 cut along a line L2-L2 according to still another embodiment;
FIG. 14 is a sectional view of the terminal device shown in FIG. 2 cut along a line L2-L2 according to yet another embodiment;
FIG. 15 is a diagram of a three-dimensional structure of the terminal device shown in FIG. 2 in an open state in a case of the terminal device being in cooperation with a cable component according to another embodiment;
FIG. 16 is a diagram of a three-dimensional structure of the terminal device shown in FIG. 2 in an open state in a case of the terminal device being in cooperation with a cable component according to still another embodiment;
FIG. 17 is a diagram of a three-dimensional structure of the terminal device shown in FIG. 2 in an open state in a case of the terminal device being in cooperation with a cable component according to yet another embodiment;
FIG. 18 is a diagram of a three-dimensional structure of the terminal device shown in FIG. 2 in an open state in a case of the terminal device being in cooperation with a cable component according to another embodiment;
FIG. 19 is a diagram of a three-dimensional structure of the terminal device shown in FIG. 3 in an open state in a case of the terminal device being in cooperation with a cable component according to another embodiment;
FIG. 20 is a diagram of a structure of the terminal device shown in FIG. 19 in a closed state in a case of the terminal device being in cooperation with a cable component;
FIG. 21 is a diagram of a three-dimensional structure of the terminal device shown in FIG. 3 in an open state in a case of the terminal device being in cooperation with a cable component according to still another embodiment; and
FIG. 22 is a diagram of a structure of the terminal device shown in FIG. 21 in a closed state in a case of the terminal device being in cooperation with a cable component.

### DESCRIPTION OF EMBODIMENTS

Embodiments of this application provide a terminal device and a power supply system. The terminal device is used in the power supply system, and the power supply system is configured to charge an electric vehicle. According to the terminal device and the power supply system provided in this application, heat dissipation efficiency is greatly improved, a heat dissipation capability is improved, environment tolerance is improved, and a service life is prolonged while ensuring high charging efficiency for the terminal device and the power supply system. In this application, "connection" between a component A and a component B means that the component A is directly or indirectly connected to the component B. The connection includes a fixed connection and an electrical connection.

The following describes embodiments of this application with reference to the accompanying drawings in embodiments of this application.

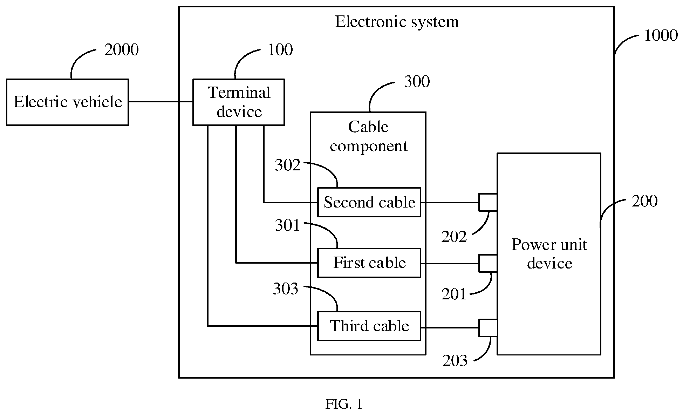

FIG. 1 is a block diagram of a structure of a power supply system 1000 in cooperation with an electric vehicle 2000 according to an embodiment of this application. The power supply system 1000 is connected to the electric vehicle 2000. The power supply system 1000 is configured to charge the electric vehicle 2000. The electric vehicle 2000 may be various electric vehicles such as a pure electric vehicle, a hybrid vehicle, a fuel cell vehicle, or a tram. This is not specifically limited in this application.

The power supply system 1000 includes a terminal device 100, a power unit device 200, and a cable component 300. The cable component 300 is connected to the terminal device 100 and the power unit device 200. The power unit device 200 is electrically connected to the terminal device 100 via the cable component 300. The power unit device 200 is configured to output a charging direct current. For example, a current value of the charging direct current is greater than 300 A (Ampere, ampere) and less than 1000 A. The charging direct current output by the power unit device 200 is transmitted to the terminal device 100 via the cable component 300. In other words, the power unit device 200 is configured to provide the charging direct current for the terminal device 100.

The terminal device 100 is connected to the electric vehicle 2000, and the charging direct current output by the power unit device 200 is transmitted to the electric vehicle 2000 via the cable component 300 and the terminal device 100, to implement a charging service for the electric vehicle 2000. It should be noted that a larger value of the direct current output by the power unit device 200 indicates higher efficiency of charging the electric vehicle 2000 by the power unit device 200 via the cable component 300 and the terminal device 100.

In some embodiments, the power unit device 200 includes a positive output end 201, a negative output end 202, and a grounding end 203. The negative output end 202, the positive output end 201, and the grounding end 203 are sequentially disposed on a side of the power unit device 200 at intervals. The positive output end 201 is configured to output the charging direct current. The negative output end 202 is configured to receive the charging direct current. After the charging direct current is output from the positive output end 201 of the power unit device 200, the charging direct current flows back to the power unit device 200 from the negative output end 202. The grounding end 203 is configured to perform grounding protection.

The cable component 300 includes a first cable 301, a second cable 302, and a third cable 303. The first cable 301 is connected to the positive output end 201 of the power unit device 200 and the terminal device 100. The second cable 302 is connected to the negative output end 202 of the power unit device 200 and the terminal device 100. The third cable 303 is connected to the grounding end 203 of the power unit device 200 and the terminal device 100. The charging direct current output by the power unit device 200 may be transmitted to the terminal device 100 via the first cable 301, the second cable 302, and the third cable 303, and then may be transmitted to the electric vehicle 2000 via the terminal device 100, to implement fast charging on the electric vehicle 2000.

The following specifically describes the terminal device 100 provided in this embodiment of this application with reference to the accompanying drawings.

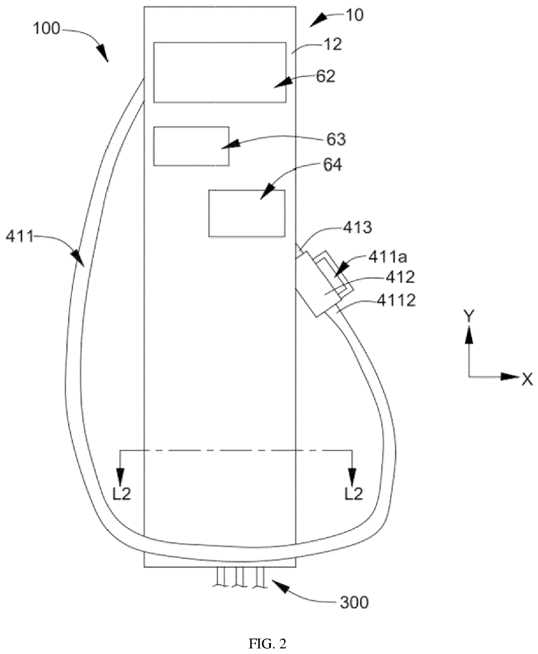

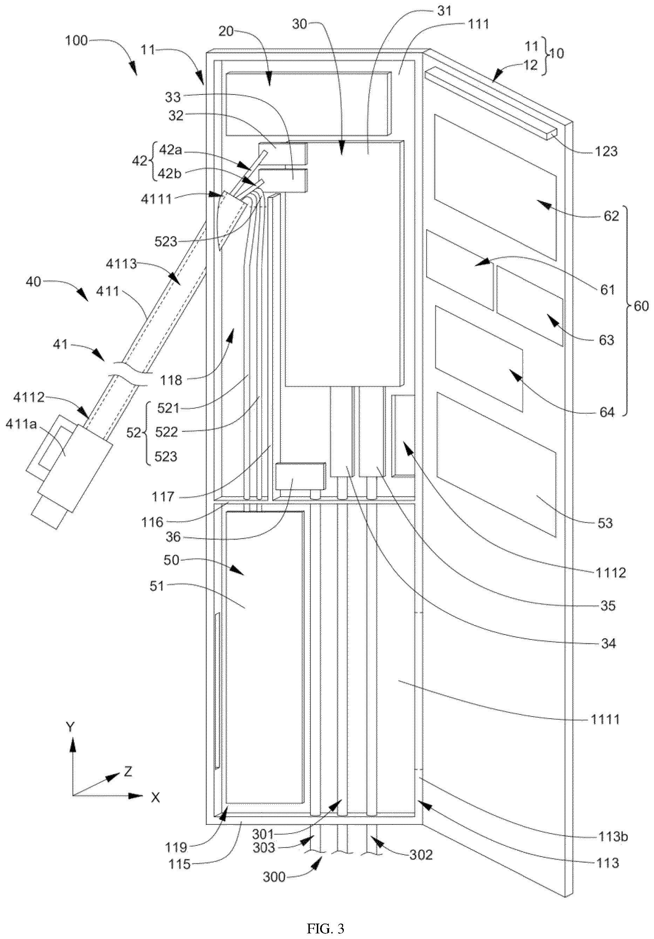

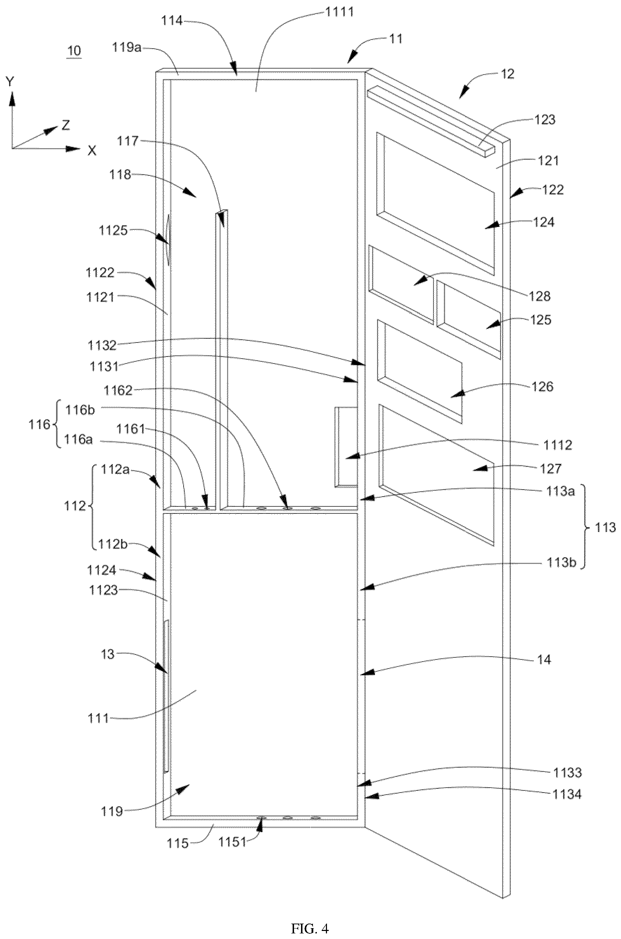

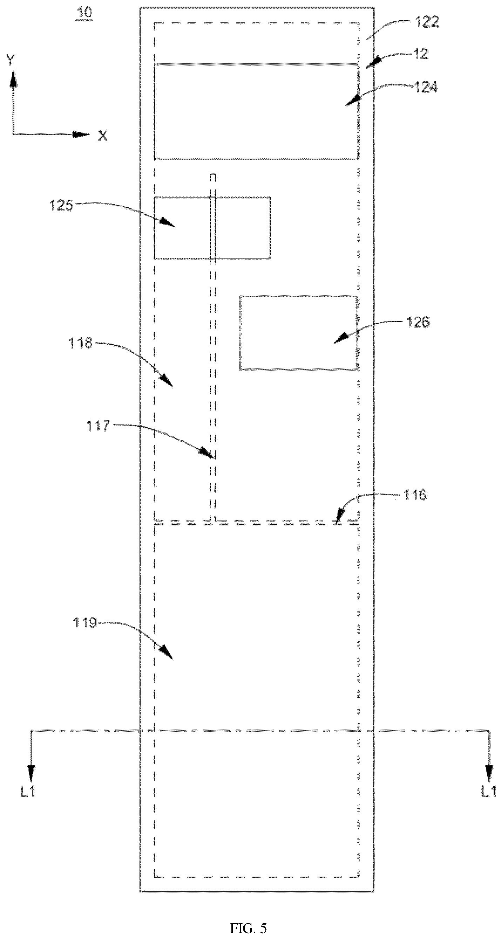

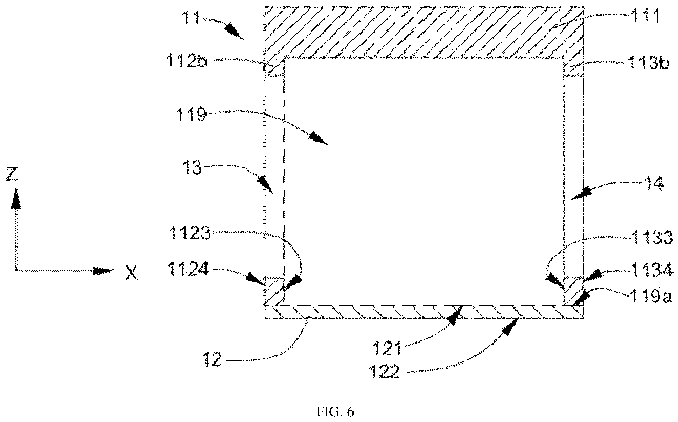

Refer to FIG. 2, FIG. 3, FIG. 4, FIG. 5, and FIG. 6 with reference to FIG. 1. FIG. 2 is a diagram of a structure of the terminal device 100 of the power supply system 1000 shown in FIG. 1 in a closed state in a case of the terminal device being in cooperation with the cable component 300. FIG. 3 is a diagram of a three-dimensional structure of the terminal device 100 shown in FIG. 2 in an open state in a case of the terminal device being in cooperation with the cable component 300. FIG. 4 is a diagram of a three-dimensional structure of a housing 10 of the terminal device 100 shown in FIG. 3 in an open state. FIG. 5 is a diagram of a structure of the housing 10 shown in FIG. 4 in a closed state. FIG. 6 is a sectional view of the housing 10 shown in FIG. 5 cut along a line L1-L1.

As shown in FIG. 1, FIG. 2, and FIG. 3, in some embodiments, the terminal device 100 includes the housing 10, a control circuit board 20, a power distribution component 30, a charging component 40, a cooling component 50, and an auxiliary component 60. The control circuit board 20 is accommodated in the housing 10. The power distribution component 30 is accommodated in the housing 10, and is electrically connected to the control circuit board 20. The charging component 40 penetrates into the housing 10, and is connected to the power distribution component 30. The cooling component 50 is accommodated in the housing 10, and is electrically connected to the control circuit board 20. The cooling component 50 is fastened to the charging component 40, and the cooling component 50 is configured to perform heat dissipation for the charging component 40 and the power distribution component 30. The auxiliary component 60 is accommodated in the housing 10, and is electrically connected to the control circuit board 20.

The cable component 300 penetrates into the housing 10, and is accommodated in the housing 10 and connected to the power distribution component 30. The charging component 40 is connected to the electric vehicle 2000. The charging direct current output from the power unit device 200 is transmitted to the power distribution component 30 of the terminal device 100 via the cable component 300, and the power distribution component 30 transmits the charging direct current to the electric vehicle 2000 via the charging component 40, so that the power supply system 1000 implements fast charging on the electric vehicle 2000. It may be understood that the cable component 300 is electrically connected to the power unit device 200 and the power distribution component 30 of the terminal device 100.

For ease of description below, a height direction of the housing 10 is defined as a first direction (that is, a Y-axis direction shown in the figure), a width direction of the housing 10 is defined as a second direction (that is, an X-axis direction shown in the figure), and a thickness direction of the housing 10 is defined as a third direction (that is, a Z-axis direction shown in the figure). The first direction, the second direction, and the third direction are perpendicular to each other. A Y-axis negative direction a is a gravity direction.

As shown in FIG. 4 and FIG. 5, in some embodiments, the housing 10 includes a main housing 11 and a cover plate 12. The cover plate 12 is connected to the main housing 11. Specifically, the cover plate 12 is rotatably connected to a side of the main housing 11. The cover plate 12 may rotate relative to the main housing 11, so that the housing 10 can switch between the open state and the closed state. In this embodiment, directions of rotation axes of the terminal device 100 and the housing 10 are the Y-axis direction, and the cover plate 12 rotates, relative to the main housing 11, to the open state and the closed state in the Y-axis direction.

As shown in FIG. 2 and FIG. 5, when the cover plate 12 rotates relative to the main housing 11 to the closed state, correspondingly, the terminal device 100 is in the closed state. The cover plate 12 is disposed in parallel with the main housing 11. The cover plate 12 and the main housing 11 are enclosed to form accommodating space. In some other embodiments, the cover plate 12 may alternatively be fastened to the main housing 11 to be enclosed to form accommodating space.

As shown in FIG. 3 and FIG. 4, when the cover plate 12 rotates relative to the main housing 11 to the open state, correspondingly, the terminal device 100 is in the open state, and the cover plate 12 and the main housing 11 are disposed at an angle of 135°. In some other embodiments, the cover plate 12 and the main housing 11 may alternatively be disposed at an angle of any value between 0° and 180°. This is not limited in this application.

As shown in FIG. 1, FIG. 2, and FIG. 3, it may be understood that when the cover plate 12 rotates relative to the main housing 11 to the open state, correspondingly, the terminal device 100 is in the open state, and a user may mount a component inside the housing 10, that is, assemble the terminal device 100. When the cover plate 12 rotates relative to the main housing 11 to the closed state, correspondingly, the terminal device 100 is in the closed state, and the power unit device 200 may charge the electric vehicle 2000 via the terminal device 100.

A design in which the cover plate 12 is rotatably connected to the main housing 11 not only facilitates mounting of the housing 10, but also prevents a component accommodated in the housing 10 from being exposed outside the housing 10, thereby improving safety of the component accommodated in the housing 10, prolonging a service life of the terminal device 100, and improving aesthetics of the terminal device 100. In addition, both the cover plate 12 and the main housing 11 may be configured to mount another component of the terminal device 100. This not only greatly improves space utilization of the housing 10, but also facilitates maintenance and replacement of the component accommodated in the housing 10. This further helps reduce thickness of the housing 10, thereby facilitating a miniaturization design of the housing 10.

As shown in FIG. 4, FIG. 5, and FIG. 6, in some embodiments, the main housing 11 includes a first connection wall 111, a second connection wall 112, a third connection wall 113, a fourth connection wall 114, a fifth connection wall 115, a spacer plate 116, and a baffle plate 117. In the Z-axis direction, the second connection wall 112, the third connection wall 113, the fourth connection wall 114, the fifth connection wall 115, the spacer plate 116, and the baffle plate 117 are located on a side of the first connection wall 111, and are fastened to the first connection wall 111. The second connection wall 112 extends in the Y-axis direction. The third connection wall 113 extends in the Y-axis direction, and the third connection wall 113 and the second connection wall 112 are spaced apart and opposite to each other. The fourth connection wall 114, the fifth connection wall 115, and the spacer plate 116 all extend in the X-axis direction. In the Y-axis negative direction, the fourth connection wall 114, the spacer plate 116, and the fifth connection wall 115 are fastened between the second connection wall 112 and the third connection wall 113 in sequence, and are spaced apart apart from each other. The baffle plate 117 extends in the Y-axis direction. The baffle plate 117 is located on a side that is of the spacer plate 116 and that faces away from the fifth connection wall 115, is fastened to the spacer plate 116, and is spaced apart apart from the fourth connection wall 114.

The first connection wall 111, the second connection wall 112, the third connection wall 113, the fourth connection wall 114, and the spacer plate 116 are enclosed to form a first accommodating groove 118. The first connection wall 111, the second connection wall 112, the third connection wall 113, the fifth connection wall 115, and the spacer plate 116 are enclosed to form a second accommodating groove 119. In a Y-axis positive direction, the second accommodating groove 119 and the first accommodating groove 118 are sequentially arranged, and are spaced apart via the spacer plate 116. The baffle plate 117 is disposed in the first accommodating groove 118.

In other words, the main housing 11 includes the first accommodating groove 118 and the second accommodating groove 119. In the first direction (specifically, in the Y-axis positive direction), the second accommodating groove 119 and the first accommodating groove 118 are sequentially arranged, and are spaced apart. In other words, the first accommodating groove 118 is located on the top of the main housing 11, and correspondingly, the first accommodating groove 118 is located on the top of the terminal device 100. The second accommodating groove 119 is located at the bottom of the main housing 11, and correspondingly, the second accommodating groove 119 is located at the bottom of the terminal device 100.

For example, the first connection wall 111 is a rectangular plate body. The first connection wall 111 includes a first mating surface 1111, and the first mating surface 1111 is perpendicular to the Z-axis direction. It should be noted that, in this application, a small deviation may also be allowed for a feature A being perpendicular to a feature B.

For example, the second connection wall 112 is a rectangular plate body. The second connection wall 112 is fastened to the first mating surface 1111 of the first connection wall 111. The second connection wall 112 includes a first portion 112a and a second portion 112b, and the first portion 112a extends in the Y-axis direction. The second portion 112b is fastened to one end of the first portion 112a, and extends in the Y-axis direction. In the Y-axis negative direction, the first portion 112a and the second portion 112b are sequentially arranged. The first portion 112a includes a first wall surface 1121 and a second wall surface 1122, and the first wall surface 1121 and the second wall surface 1122 are disposed back to back in the X-axis direction. The second portion 112b includes a third wall surface 1123 and a fourth wall surface 1124. The third wall surface 1123 and the fourth wall surface 1124 are disposed back to back in the X-axis direction. In the Y-axis direction, the third wall surface 1123 is flush with the first wall surface 1121, and the fourth wall surface 1124 is flush with the second wall surface 1122.

For example, the third connection wall 113 is a rectangular plate body. The third connection wall 113 is fastened to the first mating surface 1111 of the first connection wall 111, is located on a side that is of the second connection wall 112 and that faces away from the second wall surface 1122 and the fourth wall surface 1124, and is spaced apart apart from the second connection wall 112. The third connection wall 113 includes a third portion 113a and a fourth portion 113b. The third portion 113a extends in the Y-axis direction, and the fourth portion 113b is fastened to one end of the third portion 113a and extends in the Y-axis direction. In the Y-axis negative direction, the third portion 113a and the fourth portion 113b are sequentially arranged.

The third portion 113a includes a fifth wall surface 1131 and a sixth wall surface 1132, and the fifth wall surface 1131 and the sixth wall surface 1132 are disposed back to back in the X-axis direction. The fourth portion 113b includes a seventh wall surface 1133 and an eighth wall surface 1134. The seventh wall surface 1133 and the eighth wall surface 1134 are disposed back to back in the X-axis direction. In the Y-axis direction, the seventh wall surface 1133 is flush with the fifth wall surface 1131, and the eighth wall surface 1134 is flush with the sixth wall surface 1132. The fifth wall surface 1131 faces the first wall surface 1121 of the second connection wall 112, and the seventh wall surface 1133 faces the third wall surface 1123 of the second connection wall 112. In the X-axis direction, the first portion 112a of the second connection wall 112 and the third portion 113a of the third connection wall 113 are arranged in a straight line and spaced apart, and the second portion 112b of the second connection wall 112 and the fourth portion 113b of the third connection wall 113 are arranged in a straight line and spaced apart.

For example, the fourth connection wall 114 is a rectangular plate body. The fourth connection wall 114 is fastened to the first mating surface 1111 of the first connection wall 111, and is fastened between the first portion 112a of the second connection wall 112 and the third portion 113a of the third connection wall 113.

For example, the fifth connection wall 115 is a rectangular plate body. The fifth connection wall 115 is fastened to the first mating surface 1111 of the first connection wall 111, and is fastened between the second portion 112b of the second connection wall 112 and the fourth portion 113b of the third connection wall 113. The fifth connection wall 115 and the fourth connection wall 114 are spaced apart and opposite to each other in the Y-axis direction.

For example, the spacer plate 116 is a rectangular plate body. The spacer plate 116 is fastened to the first mating surface 1111 of the first connection wall 111. One end of the spacer plate 116 is fastened to a joint between the first portion 112a and the second portion 112b of the second connection wall 112, and the other end of the spacer plate 116 is fastened to a joint between the third portion 113a and the fourth portion 113b of the third connection wall 113. In the Y-axis direction, the spacer plate 116 is located between the fourth connection wall 114 and the fifth connection wall 115, and is spaced apart apart from the fourth connection wall 114 and the fifth connection wall 115. Specifically, the spacer plate 116 includes a fifth portion 116a and a sixth portion 116b. The fifth portion 116a extends in the X-axis direction, and one end of the sixth portion 116b is fastened to the fifth portion 116a and extends in the X-axis direction. An end that is of the fifth portion 116a and that faces away from the sixth portion 116b is fastened to the joint between the first portion 112a and the second portion 112b of the second connection wall 112. An end that is of the sixth portion 116b and that faces away from the fifth portion 116a is fastened to the joint between the third portion 113a and the fourth portion 113b of the third connection wall 113.

The first connection wall 111, the first portion 112a of the second connection wall 112, the spacer plate 116, the third portion 113a of the third connection wall 113, and the fourth connection wall 114 are enclosed to form the first accommodating groove 118. The first connection wall 111, the second portion 112b of the second connection wall 112, the spacer plate 116, the fourth portion 113b of the third connection wall 113, and the fifth connection wall 115 are enclosed to form the second accommodating groove 119. The first accommodating groove 118 and the second accommodating groove 119 are spaced apart via the spacer plate 116. It may be understood that the first accommodating groove 118 includes a part of the first mating surface 1111. For ease of description, the part of the first mating surface 1111 is defined as a mating groove surface.

For example, the baffle plate 117 is a rectangular plate body. The baffle plate 117 is fastened to the first mating surface 1111 of the first connection wall 111, and is accommodated in the first accommodating groove 118. Specifically, the baffle plate 117 is disposed on the mating groove surface of the first accommodating groove 118. In the X-axis direction, the baffle plate 117 is located between the second connection wall 112 and the third connection wall 113, and is spaced apart apart from the second connection wall 112 and the third connection wall 113. In the Y-axis direction, the baffle plate 117 is located between the spacer plate 116 and the fourth connection wall 114. The baffle plate 117 extends in the Y-axis direction. One end of the baffle plate 117 is fastened to the spacer plate 116, and the other end of the baffle plate 117 and the fourth connection wall 114 are spaced apart. Specifically, one end of the baffle plate 117 is fastened to a joint between the fifth portion 116a and the sixth portion 116b of the spacer plate 116, and the other end and the fourth connection wall 114 are spaced apart.

A surface that is of the first portion 112a of the second connection wall 112 and that faces away from the first connection wall 111, a surface that is of the second portion 112b of the second connection wall 112 and that faces away from the first connection wall 111, a surface that is of the third portion 113a of the third connection wall 113 and that faces away from the first connection wall 111, a surface that is of the fourth portion 113b of the third connection wall 113 and that faces away from the first connection wall 111, a surface that is of the fourth connection wall 114 and that faces away from the first connection wall 111, a surface that is of the fifth connection wall 115 and that faces away from the first connection wall 111, a surface that is of the fifth portion 116a of the spacer plate 116 and that faces away from the first connection wall 111, a surface that is of the sixth portion 116b of the spacer plate 116 and that faces away from the first connection wall 111, and a surface that is of the baffle plate 117 and that faces away from the first connection wall 111 are all flush with each other to form a second mating surface 119a of the main housing 11.

In some embodiments, the first connection wall 111 is provided with a mounting groove 1112. Specifically, the mounting groove 1112 is concavely disposed on the mating groove surface of the first accommodating groove 118. In the X-axis direction, the mounting groove 1112 is located on a side that is of the baffle plate 117 and that faces away from the second connection wall 112, and is spaced apart apart from the baffle plate 117. The mounting groove 1112 extends, in the X-axis direction, in a direction that faces away from the baffle plate 117 and has an opening, and the opening is located on a surface that is of the first connection wall 111 and that is in an X-axis positive direction. It may be understood that the first connection wall 111 and the third portion 113a of the third connection wall 113 are enclosed to form a mounting opening, the mounting opening is in communication with the mounting groove 1112, and an external component may be accommodated in the mounting groove 1112 through the mounting opening. A design of the mounting groove 1112 helps improve space utilization of the main housing 11, and helps improve the space utilization of the housing 10, thereby further helping improve space utilization of the terminal device 100, and facilitating a miniaturization design of the terminal device 100.

In some embodiments, the second connection wall 112 is provided with a through hole 1125. Specifically, the first portion 112a of the second connection wall 112 is provided with the through hole 1125. The through hole 1125 extends in the X-axis direction and has two openings. One opening is located on the first wall surface 1121 of the first portion 112a, and the other opening is located on the second wall surface 1122 of the first portion 112a. The through hole 1125 penetrates the first portion 112a of the second connection wall 112 in the X-axis direction and is in communication with the first accommodating groove 118. In other words, the main housing 11 is provided with the through hole 1125. A hole axis of the through hole 1125 extends in the X-axis direction and is in communication with the first accommodating groove 118. It may be understood that, in the X-axis direction, the mounting groove 1112 and the through hole 1125 are located on two opposite sides of the main housing 11.

In some embodiments, the second connection wall 112 is provided with a first air vent 13. Specifically, the second portion 112b of the second connection wall 112 is provided with the first air vent 13. The first air vent 13 extends in the X-axis direction and has two openings. One opening is located on the third wall surface 1123 of the second portion 112b, and the other opening is located on the fourth wall surface 1124 of the second portion 112b. The first air vent 13 penetrates the second portion 112b of the second connection wall 112 in the X-axis direction and is in communication with the second accommodating groove 119.

The third connection wall 113 is provided with a second air vent 14. Specifically, the fourth portion 113b of the third connection wall 113 is provided with the second air vent 14. The second air vent 14 extends in the X-axis direction and has two openings. One opening is located on the seventh wall surface 1133 of the fourth portion 113b, and the other opening is located on the eighth wall surface 1134 of the fourth portion 113b. The second air vent 14 penetrates the fourth portion 113b of the third connection wall 113 in the X-axis direction and is in communication with the second accommodating groove 119. The second air vent 14 and the first air vent 13 are spaced apart and opposite to each other in the X-axis direction. In other words, the main housing 11 is provided with the first air vent 13 and the second air vent 14. In the second direction (X-axis direction), the first air vent 13 and the second air vent 14 are spaced apart and opposite to each other, and are both in communication with the second accommodating groove 119. Hole axes of both the first air vent 13 and the second air vent 14 extend in the second direction.

In some embodiments, the fifth connection wall 115 is provided with a plurality of cable routing holes 1151. For example, there are three cable routing holes 1151, and the three cable routing holes 1151 are spaced apart in the X-axis direction. Each cable routing hole 1151 extends in the Y-axis direction and has two openings. One opening is located on a surface that is of the fifth connection wall 115 and that faces the second accommodating groove 119, and the other opening is located on a surface that is of the fifth connection wall 115 and that faces away from the second accommodating groove 119. Each cable routing hole 1151 penetrates the fifth connection wall 115 in the Y-axis direction and is in communication with the second accommodating groove 119.

In some embodiments, the spacer plate 116 is provided with a plurality of first vias 1161. Specifically, the fifth portion 116a of the spacer plate 116 is provided with the plurality of first vias 1161. For example, there are two first vias 1161, and the two first vias 1161 are spaced apart in the X-axis direction. Each first via 1161 extends in the Y-axis direction and has two openings. One opening is located on a surface that is of the fifth portion 116a and that faces the first accommodating groove 118, and the other opening is located on a surface that is of the fifth portion 116a and that faces the second accommodating groove 119. Each first via 1161 penetrates the fifth portion 116a of the spacer plate 116 in the Y-axis direction and is in communication with the first accommodating groove 118 and the second accommodating groove 119.

In some embodiments, the spacer plate 116 is provided with a plurality of second vias 1162. Specifically, the sixth portion 116b of the spacer plate 116 is provided with the plurality of second vias 1162. For example, there are three second vias 1162, and the three second vias 1162 are spaced apart in the X-axis direction. Each second via 1162 extends in the Y-axis direction and has two openings. One opening is located on a surface that is of the sixth portion 116b and that faces the first accommodating groove 118, and the other opening is located on a surface that is of the sixth portion 116b and that faces the second accommodating groove 119. Each second via 1162 penetrates the sixth portion 116b of the spacer plate 116 in the Y-axis direction and is in communication with the first accommodating groove 118 and the second accommodating groove 119.

In some embodiments, the cover plate 12 is rotatably connected to the third connection wall 113 of the main housing 11. For example, the cover plate 12 is a rectangular plate body. The cover plate 12 includes a first mounting surface 121 and a second mounting surface 122. The first mounting surface 121 and the second mounting surface 122 are disposed back to back. When the cover plate 12 rotates relative to the main housing 11 to the closed state, the first mounting surface 121 of the cover plate 12 is opposite to and connected to the second mating surface 119a of the main housing 11, the second mounting surface 122 of the cover plate 12 faces away from the second mating surface 119a, and the cover plate 12 and the main housing 11 are stacked in the third direction (that is, the Z-axis direction). When the cover plate 12 rotates relative to the main housing 11 to the open state, the first mounting surface 121 of the cover plate 12 and the second mating surface 119a of the main housing 11 are disposed at the angle of 135°. In some other embodiments, alternatively, the cover plate 12 is rotatably connected to the second connection wall 112 of the main housing 11. This is not specifically limited in this application.

When the cover plate 12 rotates relative to the main housing 11 to the closed state, the cover plate 12 covers the first accommodating groove 118 to form a first accommodating cavity, and the cover plate 12 covers the second accommodating groove 119 to form a second accommodating cavity. In this way, the cover plate 12 and the main housing 11 are enclosed to form the accommodating space, and the accommodating space includes the first accommodating cavity and the second accommodating cavity. In other words, when the housing 10 is in the closed state, the housing 10 includes the first accommodating cavity and the second accommodating cavity, and the first accommodating cavity and the second accommodating cavity are sequentially arranged in the first direction (Y-axis direction) and spaced apart.

It may be understood that the housing 10 is provided with the through hole 1125, the through hole 1125 is in communication with the first accommodating cavity, and the hole axis of the through hole 1125 extends in the second direction (X-axis direction). The housing 10 is provided with air vents (including the first air vent 13 and the second air vent 14 that are disposed on the main housing 11), and the air vent is in communication with the second accommodating cavity. The housing 10 is provided with the baffle plate 117, and the baffle plate 117 is disposed in the first accommodating cavity.

In some embodiments, the cover plate 12 is provided with a boss 123. Specifically, the first mounting surface 121 of the cover plate 12 is provided with the boss 123. The cover plate 12 is provided with a first mounting hole 124. In the Y-axis negative direction, the first mounting hole 124 is located on a side of the boss 123, and is spaced apart apart from the boss 123. The first mounting hole 124 extends in a thickness direction of the cover plate 12 and has two openings. One opening is located on the first mounting surface 121, and the other opening is located on the second mounting surface 122. The cover plate 12 is provided with a second mounting hole 125. In the Y-axis direction, the second mounting hole 125 is located on a side that is of the first mounting hole 124 and that faces away from the boss 123, and is spaced apart apart from the first mounting hole 124. The second mounting hole 125 extends in the thickness direction of the cover plate 12 and has two openings. One opening is located on the first mounting surface 121, and the other opening is located on the second mounting surface 122. The cover plate 12 is provided with a third mounting hole 126. In the Y-axis direction, the third mounting hole 126 is located on a side that is of the second mounting hole 125 and that faces away from the first mounting hole 124, and is spaced apart apart from the second mounting hole 125. The third mounting hole 126 extends in the thickness direction of the cover plate 12 and has two openings. One opening is located on the first mounting surface 121, and the other opening is located on the second mounting surface 122.

The cover plate 12 is provided with a fourth mounting hole 127. In the Y-axis direction, the fourth mounting hole 127 is located on a side that is of the third mounting hole 126 and that faces away from the second mounting hole 125, and is spaced apart apart from the third mounting hole 126. The fourth mounting hole 127 extends in the thickness direction of the cover plate 12 and has an opening. The opening is located on the first mounting surface 121. The cover plate 12 is provided with a fifth mounting hole 128. In the Y-axis direction, the fifth mounting hole 128 is located between the first mounting hole 124 and the third mounting hole 126, and is spaced apart apart from the first mounting hole 124 and the third mounting hole 126. In a width direction of the cover plate 12, the fifth mounting hole 128 is located at an end of the second mounting hole 125, and is spaced apart apart from the second mounting hole 125. The fifth mounting hole 128 extends in the thickness direction of the cover plate 12 and has an opening. The opening is located on the first mounting surface 121.

When the cover plate 12 rotates relative to the main housing 11 to the closed state, that is, when the cover plate 12 covers the first accommodating groove 118 to form the first accommodating cavity, the boss 123, the first mounting hole 124, the second mounting hole 125, the third mounting hole 126, the fourth mounting hole 127, and the fifth mounting hole 128 are all located in the first accommodating cavity. The baffle plate 117 of the main housing 11 is partially exposed outside the housing 10 via the second mounting hole 125.

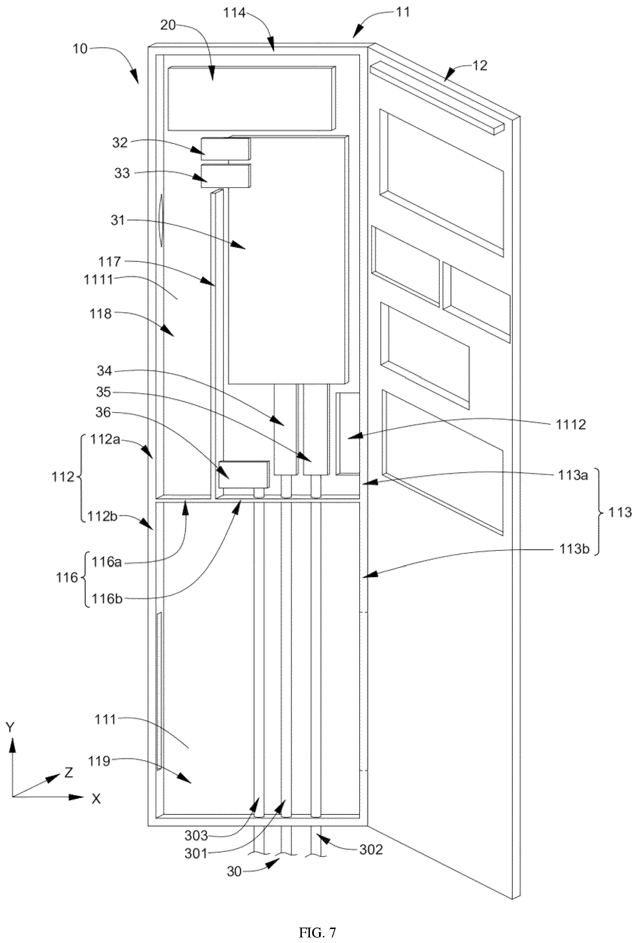

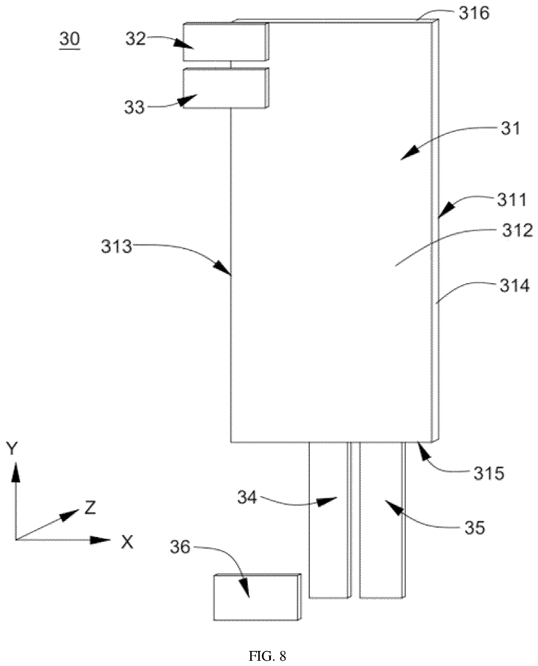

Refer to FIG. 7 and FIG. 8 with reference to FIG. 1 and FIG. 4. FIG. 7 is a diagram of a three-dimensional structure of the terminal device 100 shown in FIG. 3 with the charging component 40, the cooling component 50, and the auxiliary component 60 omitted in a case of the terminal device being in cooperation with the cable component 300. FIG. 8 is a diagram of a three-dimensional structure of the power distribution component 30 of the terminal device 100 shown in FIG. 3.

As shown in FIG. 4, FIG. 7, and FIG. 8, in some embodiments, the control circuit board 20 is fastened to the first mating surface 1111 of the first connection wall 111. In addition, in the Y-axis direction, the control circuit board 20 is located between the baffle plate 117 and the fourth connection wall 114, and is spaced apart apart from the baffle plate 117 and the fourth connection wall 114. In the X-axis direction, the control circuit board 20 is located between the first portion 112a of the second connection wall 112 and the third portion 113a of the third connection wall 113, and is spaced apart apart from the first portion 112a and the third portion 113a. In other words, the control circuit board 20 is accommodated in the first accommodating groove 118 of the main housing 11. In addition, the control circuit board 20 is fastened to the mating groove surface of the first accommodating groove 118. When the cover plate 12 rotates relative to the main housing 11 to the closed state, that is, when the cover plate 12 covers the first accommodating groove 118 to form the first accommodating cavity, the control circuit board 20 is accommodated in the first accommodating cavity.

In this way, because the control circuit board 20 is accommodated in the first accommodating cavity, the control circuit board 20 can be raised. When an external environment changes (for example, when a flood disaster occurs), a risk of a short circuit of the control circuit board 20 can be delayed. This helps improve use safety of the terminal device 100, helps improve the environmental weather resistance of the terminal device 100, and helps prolong the service life of the terminal device 100.

In some embodiments, the power distribution component 30 is fastened to the first mating surface 1111 of the first connection wall 111. In the X-axis direction, the power distribution component 30 is located between the baffle plate 117 and the third portion 113a of the third connection wall 113, and is spaced apart apart from the baffle plate 117 and the third portion 113a of the third connection wall 113. In the Y-axis direction, the power distribution component 30 is located between the control circuit board 20 and the sixth portion 116b of the spacer plate 116, and is spaced apart apart from the control circuit board 20 and the sixth portion 116b of the spacer plate 116. In other words, the power distribution component 30 is accommodated in the first accommodating groove 118 of the main housing 11. In addition, the power distribution component 30 is fastened to the mating groove surface of the first accommodating groove 118, and is electrically connected to the control circuit board 20. It may be understood that, when the cover plate 12 covers the first accommodating groove 118 to form the first accommodating cavity, the power distribution component 30 is accommodated in the first accommodating cavity.

In some embodiments, the power distribution component 30 includes a power distribution device 31, a first terminal 32, a second terminal 33, a third terminal 34, a fourth terminal 35, and a fifth terminal 36. In the X-axis direction, the first terminal 32 and the second terminal 33 are connected to a side of the power distribution device 31 and spaced apart. In the Y-axis direction, the third terminal 34 and the fourth terminal 35 are connected to an end of the power distribution device 31 and spaced apart. The fifth terminal 36 is located at an end of the power distribution device 31, and is spaced apart apart from the power distribution device 31. The power distribution device 31 is electrically connected to an external device via the first terminal 32, the second terminal 33, the third terminal 34, the fourth terminal 35, and the fifth terminal 36.

The power distribution device 31 is configured to implement connection and disconnection control, current detection, overcurrent protection, and the like on a power loop of the terminal device 100. For example, the power distribution device 31 is a rectangular plate body. The power distribution device 31 includes a first surface 311, a second surface 312, a third surface 313, a fourth surface 314, a fifth surface 315, and a sixth surface 316. The first surface 311 and the second surface 312 are disposed back to back in the Z-axis direction. The third surface 313 and the fourth surface 314 are disposed back to back in the X-axis direction. Both the third surface 313 and the fourth surface 314 are connected between the first surface 311 and the second surface 312. The fifth surface 315 and the sixth surface 316 are disposed back to back in the Y-axis direction. The fifth surface 315 and the sixth surface 316 are connected between the first surface 311 and the second surface 312, and are connected between the third surface 313 and the fourth surface 314.

The first surface 311 of the power distribution device 31 is opposite to and connected to the first mating surface 1111 of the first connection wall 111 in a manner that includes but is not limited to welding or adhesive bonding. Specifically, the first surface 311 is opposite to and connected to the mating groove surface of the first accommodating groove 118. The second surface 312 of the power distribution device 31 faces away from the first mating surface 1111. The third surface 313 of the power distribution device 31 faces the baffle plate 117, and is spaced apart apart from the baffle plate 117. The fourth surface 314 of the power distribution device 31 faces the third portion 113a of the third connection wall 113, and is spaced apart apart from the third portion 113a. The fifth surface 315 of the power distribution device 31 faces the sixth portion 116b of the spacer plate 116, and is spaced apart apart from the sixth portion 116b of the spacer plate 116. The sixth surface 316 of the power distribution device 31 faces the control circuit board 20, and is spaced apart apart from the control circuit board 20. It may be understood that the power distribution device 31 is stacked on the mating groove surface of the first accommodating groove 118, and the power distribution device 31 is accommodated in the first accommodating groove 118 of the main housing 11. In the X-axis direction, the power distribution device 31 is located between the baffle plate 117 and the third connection wall 113, and is spaced apart apart from the baffle plate 117 and the third connection wall 113. In the Y-axis direction, the power distribution device 31 is located between the control circuit board 20 and the spacer plate 116, and is spaced apart apart from the control circuit board 20 and the spacer plate 116. The power distribution device 31 is electrically connected to the control circuit board 20 in a manner that includes but is not limited to a conducting wire, a cable, and the like.

For example, the first terminal 32 is a copper bar. In some other embodiments, the first terminal 32 may alternatively be made of another conductive material like silver, aluminum, or iron. This is not specifically limited in this application. In some embodiments, the first terminal 32 is a rectangular plate body. The first terminal 32 is located on a side that is of the power distribution device 31 and that is close to the third surface 313, and is located on an end that is of the power distribution device 31 and that is close to the sixth surface 316. The first terminal 32 is partially connected to the second surface 312 of the power distribution device 31. The first terminal 32 is partially stacked on the power distribution device 31. In the X-axis direction, the first terminal 32 is located between the power distribution device 31 and the first portion 112a of the second connection wall 112, and is spaced apart apart from the first portion 112a of the second connection wall 112. In the Y-axis direction, the first terminal 32 is located between the baffle plate 117 and the control circuit board 20, and is spaced apart apart from the baffle plate 117 and the control circuit board 20. The first terminal 32 is accommodated in the first accommodating groove 118 of the main housing 11.

For example, the second terminal 33 is a copper bar. In some other embodiments, the second terminal 33 may alternatively be made of another conductive material like silver, aluminum, or iron. This is not specifically limited in this application. In some embodiments, the second terminal 33 is a rectangular plate body. The second terminal 33 is located on the side that is of the power distribution device 31 and that is close to the third surface 313. In addition, the second terminal 33 is located on a side that is of the first terminal 32 and that faces away from the sixth surface 316 of the power distribution device 31, and is spaced apart apart from the first terminal 32. The second terminal 33 is partially connected to the second surface 312 of the power distribution device 31. The second terminal 33 is partially stacked on the power distribution device 31. In the X-axis direction, the second terminal 33 is located between the power distribution device 31 and the first portion 112a of the second connection wall 112, and is spaced apart apart from the first portion 112a of the second connection wall 112. In the Y-axis direction, the second terminal 33 is located between the baffle plate 117 and the first terminal 32, and is spaced apart apart from the baffle plate 117 and the first terminal 32. The second terminal 33 is accommodated in the first accommodating groove 118 of the main housing 11.

It may be understood that both the first terminal 32 and the second terminal 33 are connected to the power distribution device 31. In the first direction (in the Y-axis direction), the first terminal 32 and the second terminal 33 are spaced apart, and are both located on a side that is of the baffle plate 117 and that faces away from the second accommodating groove 119. In other words, when the cover plate 12 covers the second accommodating groove 119 to form the second accommodating cavity, both the first terminal 32 and the second terminal 33 are connected to the power distribution device 31. In the first direction (in the Y-axis direction), the first terminal 32 and the second terminal 33 are spaced apart, and are both located on a side that is of the baffle plate 117 and that faces away from the second accommodating cavity.

For example, the third terminal 34 is a copper bar. In some other embodiments, the third terminal 34 may alternatively be made of another conductive material like silver, aluminum, or iron. This is not specifically limited in this application. In some embodiments, the third terminal 34 is a rectangular plate body. The third terminal 34 is connected to the fifth surface 315 of the power distribution device 31. It may be understood that the third terminal 34 is connected to an end that is of the power distribution device 31 and that faces away from the control circuit board 20. In the X-axis direction, the third terminal 34 is located between the baffle plate 117 and the mounting groove 1112, and is spaced apart apart from the baffle plate 117 and the mounting groove 1112. In the Y-axis direction, the third terminal 34 is located between the power distribution device 31 and the sixth portion 116b of the spacer plate 116, and is spaced apart apart from the sixth portion 116b of the spacer plate 116. The third terminal 34 is accommodated in the first accommodating groove 118 of the main housing 11.

For example, the fourth terminal 35 is a copper bar. In some other embodiments, the fourth terminal 35 may alternatively be made of another conductive material like silver, aluminum, or iron. This is not specifically limited in this application. In some embodiments, the fourth terminal 35 is a rectangular plate body. The fourth terminal 35 is connected to the fifth surface 315 of the power distribution device 31. It may be understood that the fourth terminal 35 is connected to the end that is of the power distribution device 31 and that faces away from the control circuit board 20. In the X-axis direction, the fourth terminal 35 is located between the third terminal 34 and the fourth surface 314 of the power distribution device 31, and is spaced apart apart from the third terminal 34 and the fourth surface 314. In the X-axis direction, the fourth terminal 35 is located between the third terminal 34 and the mounting groove 1112, and is spaced apart apart from the third terminal 34 and the mounting groove 1112. In the Y-axis direction, the fourth terminal 35 is located between the power distribution device 31 and the sixth portion 116b of the spacer plate 116, and is spaced apart apart from the sixth portion 116b of the spacer plate 116. The fourth terminal 35 is accommodated in the first accommodating groove 118 of the main housing 11.

For example, the fifth terminal 36 is a copper bar. In some other embodiments, the fifth terminal 36 may alternatively be made of another conductive material like silver, aluminum, or iron. This is not specifically limited in this application. In some embodiments, the fifth terminal 36 is a rectangular plate body. The fifth terminal 36 is connected to the first mating surface 1111 of the first connection wall 111, and the fifth terminal 36 is stacked on the first connection wall 111 of the main housing 11. In the X-axis direction, the fifth terminal 36 is located between the baffle plate 117 and the third terminal 34, and is spaced apart apart from the baffle plate 117 and the third terminal 34. In the Y-axis direction, the fifth terminal 36 is located between the power distribution device 31 and the sixth portion 116b of the spacer plate 116, and is spaced apart apart from the power distribution device 31 and the sixth portion 116b of the spacer plate 116. It may be understood that the fifth terminal 36 is accommodated in the first accommodating groove 118 of the main housing 11. The fifth terminal 36 is fastened to the mating groove surface of the first accommodating groove 118.

It may be understood that, when the cover plate 12 covers the second accommodating groove 119 to form the second accommodating cavity, both the third terminal 34 and the fourth terminal 35 are connected to the power distribution device 31. In the Y-axis direction, both the third terminal 34 and the fourth terminal 35 are located on a side that is of the power distribution device 31 and that faces the second accommodating cavity, the fifth terminal 36 is fastened to the housing 10, and the fifth terminal 36 is located on a side that is of the power distribution device 31 and that faces the third terminal 34 and the fourth terminal 35, and is spaced apart apart from the power distribution device 31.

As shown in FIG. 1 and FIG. 7, in some embodiments, the cable component 300 penetrates into the housing 10, and is connected to the power distribution component 30. Specifically, the first cable 301 penetrates into the second accommodating groove 119 through one cable routing hole 1151 of the fifth connection wall 115, penetrates into the first accommodating groove 118 from the second accommodating groove 119 through one second cable routing hole 1162 of the spacer plate 116, and is connected to the third terminal 34. The first cable 301 is electrically connected to the power distribution device 31 through a connection between the third terminal 34 and the power distribution device 31.

Specifically, the second cable 302 penetrates into the second accommodating groove 119 through another cable routing hole 1151 of the fifth connection wall 115, penetrates into the first accommodating groove 118 from the second accommodating groove 119 through another second cable routing hole 1162 of the spacer plate 116, and is connected to the fourth terminal 35. The second cable 302 is electrically connected to the power distribution device 31 through a connection between the fourth terminal 35 and the power distribution device 31.

Specifically, the third cable 303 penetrates into the second accommodating groove 119 through still another cable routing hole 1151 of the fifth connection wall 115, penetrates into the first accommodating groove 118 from the second accommodating groove 119 through still another second cable routing hole 1162 of the spacer plate 116, and is connected to the fifth terminal 36. Through a connection between the third cable 303 and the fifth terminal 36 and a connection between the third cable 303 and the grounding end 203, the fifth terminal 36 is electrically connected to the grounding end 203, and the fifth terminal 36 is configured to perform protection grounding.

The first cable 301 and the second cable 302 are electrically connected to the power distribution device 31, and the charging direct current output by the power unit device 200 may be transmitted to the power distribution device 31. The charging direct current output by the power unit device 200 from the positive output end 201 may be transmitted from the first cable 301 to the power distribution device 31, and then flows back to the negative output end 202 of the power unit device 200 via the second cable 302.

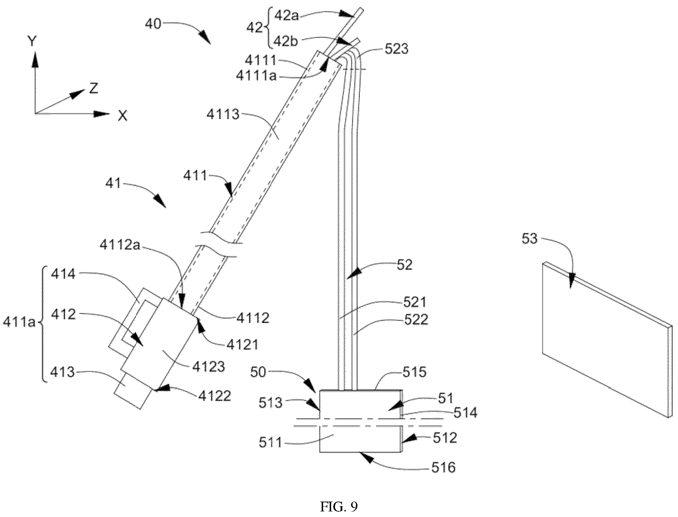

Refer to FIG. 9 with reference to FIG. 1, FIG. 2, FIG. 3, and FIG. 4. FIG. 9 is a diagram of three-dimensional structures of the charging component 40 and the cooling component 50 of the terminal device 100 shown in FIG. 3.

As shown in FIG. 3, FIG. 4, and FIG. 9, in some embodiments, the charging component 40 is inserted into the first accommodating groove 118 from the outside of the main housing 11, and is connected to the power distribution component 30. Specifically, the charging component 40 penetrates into the first accommodating groove 118 from the through hole 1125 of the first portion 112a of the second connection wall 112, and is connected to the first terminal 32 and the second terminal 33. The charging component 40 is electrically connected to the power distribution device 31.

In some embodiments, the charging component 40 includes a connector 41. A power cable 42 is disposed in the connector 41. The power cable 42 is accommodated in and connected to the connector 41. The power cable 42 extends out from an end of the connector 41. The connector 41 is partially located outside the housing 10, and is partially inserted into the first accommodating groove 118 (that is, when the cover plate 12 covers the first accommodating groove 118 to form the first accommodating cavity, the connector is partially inserted into the first accommodating cavity). The power cable 42 is connected to the first terminal 32 and the second terminal 33. The power cable 42 is connected to the first terminal 32 and the second terminal 33, and the connector 41 is electrically connected to the power distribution device 31. The connector 41 is configured to connect to the electric vehicle 2000 (as shown in FIG. 1).

In some embodiments, the connector 41 includes an accommodating hose 411 and a connector base 411a. The accommodating hose 411 is located at an end of the connector base 411a, and is connected to the connector base 411a. The accommodating hose 411 is configured to accommodate the power cable 42. The connector base 411a is connected to the power cable 42, and the connector base 411a is configured to connect to the electric vehicle 2000 (as shown in FIG. 1). The power cable 42 is electrically connected to the electric vehicle 2000 via the connector base 411a. For example, the accommodating hose 411 and the connector base 411a may be integrally formed. This helps improve strength of the connector 41.

For example, the accommodating hose 411 is a flexible hose, and the accommodating hose 411 may be bendable. The accommodating hose 411 includes a first connection section 4111 and a second connection section 4112, and the first connection section 4111 is fastened to the second connection section 4112. The first connection section 4111 includes a first end face 4111a, and the second connection section 4112 includes a second end face 4112a. The first end face 4111a and the second end face 4112a are disposed back to back in a length direction of the accommodating hose 411. The accommodating hose 411 is provided with an accommodating channel 4113, and the accommodating channel 4113 extends in the length direction of the accommodating hose 411 and has two openings. One opening is located on the first end face 4111a, and the other opening is located on the second end face 4112a.

The connector base 411a is connected to the second connection section 4112 of the accommodating hose 411. In some embodiments, the connector base 411a includes a main body part 412, a connector part 413, and an operation part 414. The main body part 412 is connected to the second connection section 4112. The connector part 413 is located at an end that is of the main body part 412 and that faces away from the accommodating hose 411, and is connected to the main body part 412. The operation part 414 is located at a side of the main body part 412, and is fastened to the main body part 412. For example, the main body part 412, the connector part 413, and the operation part 414 may be integrally formed. This helps improve overall strength of the connector base 411a.

For example, the main body part 412 is a cylinder. The main body part 412 is fastened to the second end face 4112a of the accommodating hose 411. The main body part 412 includes a third end face 4121, a fourth end face 4122, and a connecting side face 4123. The third end face 4121 and the fourth end face 4122 are disposed back to back. The connecting side face 4123 is connected between the third end face 4121 and the fourth end face 4122. The third end face 4121 is opposite to and connected to the second end face 4112a. The fourth end face 4122 faces away from the second end face 4112a. The connector part 413 is connected to the fourth end face 4122 of the main body part 412. The operation part 414 is fastened to the connecting side face 4123 of the main body part 412. A design of the operation part 414 helps the user to hold the connector 41, facilitates the connection between the connector 41 and the electric vehicle 2000 (as shown in FIG. 1), and helps the user to operate the terminal device 100 to charge the electric vehicle 2000.

In some embodiments, the power cable 42 is accommodated in the accommodating channel 4113 of the accommodating hose 411. One end of the power cable 42 extends out from the first connection section 4111 of the accommodating hose 411, and the other end is connected to the connector base 411a. Specifically, the one end of the power cable 42 extends out from the first end face 4111a of the first connection section 4111, and the other end is connected to the main body part 412.

For example, the power cable 42 includes a first power cable 42a and a second power cable 42b. The first power cable 42a and the second power cable 42b are both accommodated in the accommodating channel 4113 of the accommodating hose 411 and are spaced apart. One end of the first power cable 42a extends out from the first end face 4111a of the first connection section 4111 of the accommodating hose 411, and the other end is connected to the main body part 412. One end of the second power cable 42b extends out from the first end face 4111a of the first connection section 4111 of the accommodating hose 411, and the other end is connected to the main body part 412. In other words, the first power cable 42a and the second power cable 42b are disposed in the connector 41, and both the first power cable 42a and the second power cable 42b extend out from the end face of the first connection section 4111. The first power cable 42a and the second power cable 42b are electrically connected to the connector part 413 through the connection between the main body part 412 and the connector part 413.

The first connection section 4111 of the accommodating hose 411 passes through the through hole 1125 from the outside of the main housing 11 to the first accommodating groove 118. The first connection section 4111 passes through the through hole 1125. The second connection section 4112 of the accommodating hose 411 and the connector base 411a are both located outside the main housing 11. For example, the first connection section 4111 of the accommodating hose 411 passes through and is mounted on the through hole 1125 fixedly in a manner that includes but is not limited to welding or adhesive bonding. The connector 41 passes through and is mounted on the through hole 1125 partially and fixedly.

The first power cable 42a extending out from the end face of the first connection section 4111 of the accommodating hose 411 is connected to the first terminal 32 in a manner that includes but is not limited to welding or adhesive bonding. The second power cable 42b extending out from the end face of the first connection section 4111 of the accommodating hose 411 is connected to the second terminal 33. It may be understood that the first terminal 32 and the second terminal 33 are connected to the power distribution device 31, the first power cable 42a is connected to the first terminal 32, the second power cable 42b is connected to the second terminal 33, and the connector 41 is electrically connected to the power distribution device 31.

As shown in FIG. 1, FIG. 2, and FIG. 3, the connector part 413 of the connector base 411a of the connector 41 may be connected to the electric vehicle 2000. The charging direct current (high current) output by the power unit device 200 from the positive output end 201 is transmitted to the power distribution device 31 via the first cable 301, and is transmitted from the power distribution device 31 to the power distribution device 31 via the third terminal 34. After the power distribution device 31 detects the charging direct current, the charging direct current is transmitted from the power distribution device 31 to the first power cable 42a via the first terminal 32. The charging direct current is transmitted to the electric vehicle 2000 via the main body part 412 and the connector part 413 in sequence along the first power cable 42a.

The charging direct current is transmitted to the second power cable 42b via the connector part 413 and the main body part 412 in sequence. The charging direct current is transmitted to the power distribution device 31 along the second power cable 42b via the second terminal 33. The charging direct current is transmitted from the power distribution device 31 to the second cable 302 via the fourth terminal 35. The charging direct current flows back to the negative output end 202 of the power unit device 200 along the second cable 302. It may be understood that the charging direct current transmitted from the power distribution device 31 may be transmitted to the connector 41 via the power cable 42, and then transmitted to the electric vehicle 2000 via the connector base 411a from the connector 41, to implement fast charging on the electric vehicle 2000.

In addition, because the through hole 1125 is in communication with the first accommodating cavity, the first connection section 4111 of the connector 41 passes through the through hole 1125, so that the first connection section 4111 of the connector 41 can be raised. Weight of the connector 41 may be shared via the housing 10, so that the user can operate the connector 41 to connect to the electric vehicle 2000, and the operation is convenient.

When the electric vehicle 2000 no longer needs to be charged by the power unit device 200 via the terminal device 100, that is, when the connector part 413 of the connector base 411a of the connector 41 is not connected to the electric vehicle 2000, a part of the main body part 412 and a part of the connector part 413 may penetrate into the first accommodating groove 118 of the main housing 11 from a side that is of the third connection wall 113 of the main housing 11 and that faces away from the second connection wall 112, and are partially accommodated in the mounting groove 1112.

It may be understood that, in the X-axis direction, the first connection section 4111 of the accommodating hose 411 that passes through the through hole 1125 is mounted on one side of the main housing 11. The second connection section 4112 of the accommodating hose 411 and the connector base 411a are mounted on the other side of the main housing 11. The first connection section 4111 and the connector base 411a are located on the two opposite sides of the housing 10, and the accommodating hose 411 is wound around the housing 10. In this way, on one hand, this helps increase a length of the accommodating hose 411, and is convenient for an operator to hold the connector base 411a to connect to the electric vehicle 2000. On the other hand, this helps reduce a contact area between the accommodating hose 411 and the ground, avoids severe wear of the accommodating hose 411, helps prolong a service life of the accommodating hose 411, and further helps prolong a service life of the connector 41.

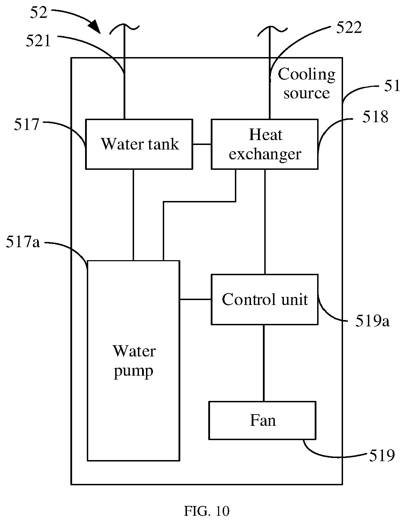

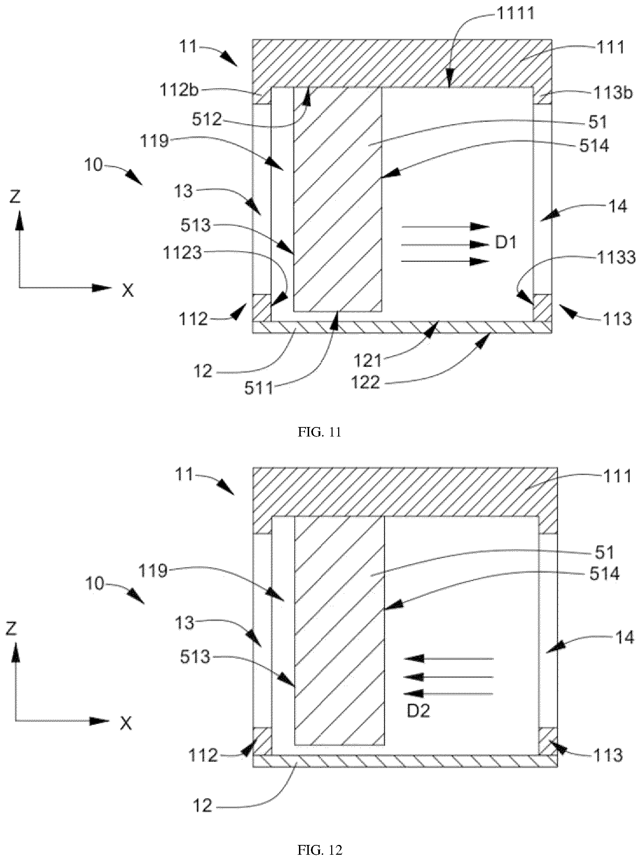

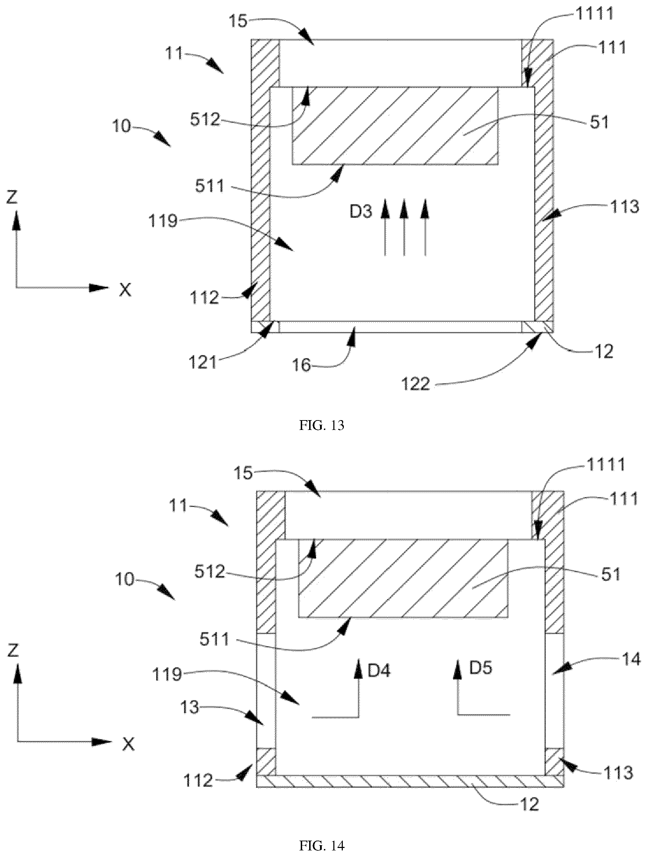

Refer to FIG. 10, FIG. 11, FIG. 12, FIG. 13, and FIG. 14 with reference to FIG. 2, FIG. 3, FIG. 4, and FIG. 9. FIG. 10 is a block diagram of a structure of cooperation between a cooling source 51 and a cooling hose 52 of the cooling component 50 shown in FIG. 9. FIG. 11 is a sectional view of the terminal device 100 shown in FIG. 2 cut along a line L2-L2. FIG. 12 is a sectional view of the terminal device 100 shown in FIG. 2 cut along a line L2-L2 according to another embodiment. FIG. 13 is a sectional view of the terminal device 100 shown in FIG. 2 cut along a line L2-L2 according to still another embodiment. FIG. 14 is a sectional view of the terminal device 100 shown in FIG. 2 cut along a line L2-L2 according to yet another embodiment.

As shown in FIG. 9 and FIG. 10, in some embodiments, the cooling component 50 includes the cooling source 51, the cooling hose 52, and an auxiliary power supply 53. In the Y-axis direction, the cooling hose 52 is located at an end of the cooling source 51, and is fastened to the cooling source 51. The auxiliary power supply 53 is electrically connected to the cooling source 51. The cooling source 51 is configured to: accommodate coolant, and drive the coolant to flow. The cooling hose 52 is configured to circulate the coolant. The auxiliary power supply 53 is configured to supply power to the cooling source 51. For example, the coolant is water. In some other embodiments, the coolant may alternatively be other coolant having good thermal conductivity. This is not specifically limited in this application.

For example, the cooling source 51 is a rectangular plate body. The cooling source 51 includes a first layer 511, a second layer 512, a third layer 513, a fourth layer 514, a fifth layer 515, and a sixth layer 516. The first layer 511 and the second layer 512 are disposed back to back in the Z-axis direction. The third layer 513 and the fourth layer 514 are disposed back to back in the X-axis direction. The third layer 513 and the fourth layer 514 are connected between the first layer 511 and the second layer 512. The fifth layer 515 and the sixth layer 516 are disposed back to back in the Y-axis direction. The fifth layer 515 and the sixth layer 516 are connected between the first layer 511 and the second layer 512, and are connected between the third layer 513 and the fourth layer 514.

In some embodiments, the cooling source 51 includes a water tank 517, a water pump 517a, a heat exchanger 518, a fan 519, and a control unit 519a. The water pump 517a, the heat exchanger 518, and the fan 519 are all electrically connected to the control unit 519a. The water tank 517 has a hollow inner cavity, and the water tank 517 is configured to accommodate the coolant. The water pump 517a is fastened to the water tank 517. The water pump 517a is configured to drive the coolant to flow. The heat exchanger 518 is connected to the water tank 517 and the water pump 517a. The heat exchanger 518 has a hollow inner cavity, the inner cavity of the heat exchanger 518 is in communication with the inner cavity of the water tank 517, and the water pump 517a may drive the coolant to flow from the inner cavity of the water tank 517 to the inner cavity of the heat exchanger 518. The heat exchanger 518 is configured to absorb heat in the coolant. The fan 519 is configured to perform heat dissipation for the heat exchanger 518. The control unit 519a is configured to adjust rotational speeds of the water pump 517a and the fan 519.

As shown in FIG. 3, FIG. 9, and FIG. 11, the second layer 512 of the cooling source 51 is opposite to and connected to the first mating surface 1111 of the main housing 11 in a manner that includes but is not limited to welding or adhesive bonding. The cooling source 51 is fastened to the first connection wall 111 of the main housing 11. The first layer 511 of the cooling source 51 faces away from the first connection wall 111. The third layer 513 of the cooling source 51 and the third wall surface 1123 of the second portion 112b of the second connection wall 112 are opposite to each other and spaced apart. The fourth layer 514 of the cooling source 51 and the seventh wall surface 1133 of the fourth portion 113b of the third connection wall 113 are opposite to each other and spaced apart. In the X-axis direction, the cooling source 51 is located between the second portion 112b of the second connection wall 112 and the fourth portion 113b of the third connection wall 113, and is spaced apart apart from the second portion 112b of the second connection wall 112 and the fourth portion 113b of the third connection wall 113. The fifth layer 515 of the cooling source 51 faces the spacer plate 116, and is spaced apart apart from the spacer plate 116. The sixth layer 516 of the cooling source 51 faces the fifth connection wall 115, and is spaced apart apart from the fifth connection wall 115. The cooling source 51 is accommodated in the second accommodating groove 119 of the main housing 11. It may be understood that, when the cover plate 12 covers the second accommodating groove 119 to form the second accommodating cavity, the cooling source 51 is accommodated in the second accommodating cavity.

In the X-axis direction, the cable component 300 is located between the cooling source 51 and the fourth portion 113b of the third connection wall 113, and is spaced apart apart from the cooling source 51 and the fourth portion 113b of the third connection wall 113. In some other embodiments, the cable component 300 may alternatively be located between the cooling source 51 and the second portion 112b of the second connection wall 112, and may be spaced apart apart from the cooling source 51 and the second portion 112b of the second connection wall 112. This is not specifically limited in this application.

As shown in FIG. 9 and FIG. 10, for example, the cooling hose 52 is a flexible hose. In some embodiments, the cooling hose 52 is located on a side of the fifth layer 515 of the cooling source 51, and is fastened to the cooling source 51. Specifically, the cooling hose 52 is fastened to the water tank 517 and the heat exchanger 518. The cooling hose 52 has a hollow hose cavity, and the hose cavity of the cooling hose 52 is in communication with the inner cavity of the water tank 517 and the inner cavity of the heat exchanger 518. Under action of the water pump 517a, the coolant in the water tank 517 may flow from the inner cavity of the water tank 517 to the heat exchanger 518, flow from the heat exchanger 518 to the cooling hose 52, and flow from the cooling hose 52 back to the water tank 517. The cooling hose 52 includes a first section 521, a second section 522, and a middle section 523. The first section 521 and the second section 522 are roughly straight sections, and the middle section 523 is a curve section. The middle section 523 is connected between the first section 521 and the second section 522. The first section 521 and the second section 522 are folded via the middle section 523.

An end of the first section 521 is fastened to the cooling source 51. Specifically, the end of the first section 521 is fastened to the water tank 517. The first section 521 is fastened to the fifth layer 515 of the cooling source 51, and extends approximately in the Y-axis positive direction. An end of the second section 522 is fastened to the cooling source 51. Specifically, the end of the second section 522 is fastened to the heat exchanger 518. The second section 522 is fastened to the fifth layer 515 of the cooling source 51, and extends approximately in the Y-axis positive direction. The second section 522 is spaced apart apart from the first section 521 in the X-axis direction. The middle section 523 is bent in a counter-clockwise direction towards the Y-axis negative direction relative to the first section 521 and the second section 522, and the middle section 523 is disposed in an inclined manner relative to the first section 521 and the second section 522. The water pump 517a of the cooling source 51 may drive the coolant in the water tank 517 to enter the cooling hose 52 from the heat exchanger 518 via the second section 522 of the cooling hose 52, and to flow back to the water tank 517 via the second section 522, the middle section 523, and the first section 521 in sequence. The cooling source 51 drives, via the water pump 517a, the coolant to flow in the cooling hose 52.

As shown in FIG. 3, FIG. 4, and FIG. 9, the first section 521 of the cooling hose 52 passes through and is mounted in one first via 1161 of the spacer plate 116 fixedly. The first section 521 passes through the spacer plate 116 from the first accommodating groove 118 to the second accommodating groove 119, and is connected to the cooling source 51. The second section 522 passes through and is mounted in another first via 1161 of the spacer plate 116 fixedly. The second section 522 passes through the spacer plate 116 from the first accommodating groove 118 to the second accommodating groove 119, and is connected to the cooling source 51. The middle section 523 extends from the first end face 4111a of the first connection section 4111 of the accommodating hose 411 into the accommodating channel 4113 of the accommodating hose 411. A part of the middle section 523 is accommodated in the accommodating hose 411 of the connector 41. In other words, the cooling hose 52 extends into the connector 41 from the end face (that is, the first end face 4111a) of the first connection section 4111, and is partially accommodated in the connector 41.

It may be understood that both the end of the first section 521 and the end of the second section 522 are fastened to the cooling source 51, and both penetrate into the second accommodating groove 119 from the first accommodating groove 118. The middle section 523 extends into the connector 41. In other words, when the cover plate 12 covers the first accommodating groove 118 and the second accommodating groove 119 to form the first accommodating cavity and the second accommodating cavity, both the end of the first section 521 and the end of the second section 522 are fastened to the cooling source 51, and both penetrate into the second accommodating cavity from the first accommodating cavity. The middle section 523 extends into the connector 41.

In the X-axis direction, the cooling hose 52 is located between the second connection wall 112 and the baffle plate 117, and the power distribution device 31 is located between the baffle plate 117 and the third connection wall 113. That is, in the second direction (that is, in the X-axis direction), the cooling hose 52 and the power distribution device 31 are located on two opposite sides of the baffle plate 117, and are both spaced apart apart from the baffle plate 117. In other words, the baffle plate 117 is located between the power distribution device 31 and the cooling hose 52, and is spaced apart apart from the power distribution device 31 and the cooling hose 52. The power distribution device 31 and the cooling hose 52 are spaced apart via the baffle plate 117. In some other embodiments, the cooling hose 52 may alternatively be located between the third connection wall 113 and the baffle plate 117, and the power distribution device 31 is located between the baffle plate 117 and the second connection wall 112. This is not specifically limited in this application.

In this way, a design of the baffle plate 117 can avoid a short circuit caused by sputtering of the coolant to the power distribution device 31 due to leakage that is of the coolant flowing in the cooling hose 52 and that is caused by damage of the cooling hose 52 and the like. This helps improve the safety of the terminal device 100 and prolong the service life of the terminal device 100.

As shown in FIG. 3, FIG. 10, and FIG. 11, it may be understood that the cooling hose 52, the first power cable 42a, and the second power cable 42b are partially accommodated in the accommodating hose 411. Because the charging direct current (high current) is transmitted in the first power cable 42a and the second power cable 42b, the first power cable 42a and the second power cable 42b easily generate a large amount of heat in a working process of the terminal device 100, and temperatures of the first power cable 42a and the second power cable 42b easily rise fast. In addition, because coolant flows in the cooling hose 52, the cooling hose 52 may quickly absorb, via the coolant, the heat dissipated by the first power cable 42a and the second power cable 42b.

In a design in which the cooling hose 52, the first power cable 42a, and the second power cable 42b are all partially accommodated in the accommodating hose 411, heat dissipation capabilities of the first power cable 42a and the second power cable 42b are greatly improved while it is ensured that the terminal device 100 implements fast charging for the electric vehicle 2000. This helps perform quick heat dissipation for the first power cable 42a and the second power cable 42b, and prevents the temperatures of the first power cable 42a and the second power cable 42b from rising excessively fast, thereby facilitating quick heat dissipation for the connector 41 and the terminal device 100. This helps improve the service life and the safety of the terminal device 100.

In addition, because the first power cable 42a is connected to the first terminal 32, the second power cable 42b is connected to the second terminal 33, and the first terminal 32 and the second terminal 33 are connected to the power distribution device 31, such a design facilitates quick heat dissipation for the first terminal 32 and the second terminal 33. Further, this facilitates fast heat dissipation for the power distribution device 31 and the terminal device 100. This helps improve the service life and the safety of the terminal device 100.

It should be noted that, after the cooling hose 52 quickly absorbs, via the coolant, the heat dissipated by the first power cable 42a and the second power cable 42b, a temperature of the coolant flowing in the cooling hose 52 rises fastly. The high-temperature coolant flows back, along the cooling hose 52, to the inner cavity of the water tank 517 of the cooling source 51 from the first section 521 of the cooling hose 52. The high-temperature coolant flows from the inner cavity of the water tank 517 to the inner cavity of the heat exchanger 518. The heat exchanger 518 absorbs the heat in the high-temperature coolant, and the fan 519 performs heat dissipation for the heat exchanger 518. The heat in the high-temperature coolant may be dissipated to an external environment via the heat exchanger 518 and the fan 519, to cool the high-temperature coolant. Driven by the water pump 517a, the coolant cooled by the heat exchanger 518 and the fan 519 flows from the inner cavity of the heat exchanger 518 into the hose cavity of the cooling hose 52 via the second section 522 of the cooling hose 52, and flows in the cooling hose 52. In this way, it is ensured that the coolant flowing in the cooling hose 52 is always maintained at a low temperature, so that the cooling hose 52 performs quick heat dissipation via the coolant, thereby facilitating quick heat dissipation for the terminal device 100.

As shown in FIG. 10 and FIG. 11, in some embodiments, external cold air may enter the second accommodating cavity (the cover plate 12 covers the second accommodating groove 119 to form the second accommodating cavity) of the housing 10, to perform heat dissipation for the cooling source 51. Specifically, the external cold air flows into the second accommodating cavity from the second connection wall 112 of the housing 10, and flows out of the second accommodating cavity from the third connection wall 113 of the housing 10. It should be noted that a direction D1 shown in FIG. 11 simply shows an air direction of the external cold air in this embodiment.

Specifically, when the cover plate 12 rotates relative to the main housing 11 to the closed state, that is, when the cover plate 12 covers the second accommodating groove 119 to form the second accommodating cavity, the second accommodating cavity is exposed outside the housing 10 through the first air vent 13 and the second air vent 14. Driven by the fan 519 of the cooling source 51, the external cold air enters the second accommodating cavity of the housing 10 from the first air vent 13 of the second connection wall 112 of the housing 10, flows from the third layer 513 of the cooling source 51 to the fourth layer 514 of the cooling source 51 via the cooling source 51, and flows out from the second air vent 14 of the third connection wall 113 of the housing 10. That is, the external cold air flows from the second connection wall 112 of the housing 10 to the third connection wall 113 of the housing 10. A design of the first air vent 13 and the second air vent 14 ensures that the external cold air can enter the second accommodating cavity to perform heat dissipation for the cooling source 51, thereby improving heat dissipation efficiency of the fan 519 for the heat exchanger 518. Further, this helps improve efficiency of performing heat dissipation by the cooling source 51 for the coolant flowing in the cooling hose 52, implements fast heat dissipation for the cooling source 51, and helps improve a heat dissipation capability of the terminal device 100.

As shown in FIG. 10 and FIG. 12, in some other embodiments, the external cold air may alternatively flow into the second accommodating cavity from the third connection wall 113 of the housing 10, and flow out of the second accommodating cavity from the second connection wall 112 of the housing 10. In this way, the external cold air may enter the second accommodating cavity of the housing 10, to perform heat dissipation for the cooling source 51. It should be noted that a direction D2 shown in FIG. 12 is a simple example of an air direction of the external cold air in this embodiment. A structure of the housing 10 shown in FIG. 12 is the same as a structure of the housing 10 shown in FIG. 11.

In this embodiment, when the cover plate 12 rotates relative to the main housing 11 to the closed state, that is, when the cover plate 12 covers the second accommodating groove 119 to form the second accommodating cavity, the second accommodating cavity is exposed outside the housing 10 through the first air vent 13 and the second air vent 14. Driven by the fan 519 of the cooling source 51, the external cold air enters the second accommodating cavity of the main housing 11 from the second air vent 14 of the third connection wall 113 of the housing 10, flows from the fourth layer 514 of the cooling source 51 to the third layer 513 of the cooling source 51 via the cooling source 51, and flows out from the first air vent 13 of the second connection wall 112 of the housing 10. The external cold air flows from the third connection wall 113 of the housing 10 to the second connection wall 112 of the housing 10. In this way, the first air vent 13 and the second air vent 14 are used to ensure that the external cold air can enter the second accommodating cavity to perform heat dissipation for the cooling source 51, thereby improving heat dissipation efficiency of the fan 519 for the heat exchanger 518. Further, this helps improve efficiency of performing heat dissipation by the cooling source 51 for the coolant flowing in the cooling hose 52, implements fast heat dissipation for the cooling source 51, and helps improve a heat dissipation capability of the terminal device 100.

As shown in FIG. 10 and FIG. 13, in still some other embodiments, the external cold air may alternatively flow into the second accommodating cavity from the cover plate 12 of the housing 10, and flow out of the second accommodating cavity from the first connection wall 111 of the housing 10. In this way, the external cold air may enter the second accommodating cavity of the housing, to perform heat dissipation for the cooling source 51. It should be noted that a direction D3 shown in FIG. 13 is a simple example of an air direction of the external cold air in this embodiment. A structure of the housing 10 shown in FIG. 13 is different from a structure of the housing 10 shown in FIG. 11.

Specifically, the second connection wall 112 is not provided with the first air vent 13, and the third connection wall 113 is not provided with the second air vent 14. The first connection wall 111 is provided with a third air vent 15. The third air vent 15 extends in the Z-axis direction and has two openings. One opening is located on the first mating surface 1111 of the first connection wall 111, and the other opening is located on a surface that is of the first connection wall 111 and that faces away from the first mating surface 1111. In other words, a hole axis of the third air vent 15 extends in the third direction (Z-axis direction) and is in communication with the second accommodating groove 119. The cover plate 12 is provided with a fourth air vent 16. The fourth air vent 16 extends in the thickness direction of the cover plate 12 and has two openings. One opening is located on the first mounting surface 121 of the cover plate 12, and the other opening is located on the second mounting surface 122 of the cover plate 12. When the cover plate 12 rotates relative to the main housing 11 to the closed state, the cover plate 12 covers the second accommodating groove 119 to form the second accommodating cavity. In the third direction (Z-axis direction), the fourth air vent 16 and the third air vent 15 are spaced apart and opposite to each other, and a hole axis of the fourth air vent 16 extends in the third direction and is in communication with the second accommodating groove 119, that is, in communication with the second accommodating cavity. The second accommodating cavity is exposed outside the housing 10 through the third air vent 15 and the fourth air vent 16.

It may be understood that the housing 10 is provided with the air vent, and the ventilation hole is in communication with the second accommodating cavity. Specifically, the main housing 11 is provided with the third air vent 15, and the cover plate 12 is provided with the fourth air vent 16. The hole axis of the third air vent 15 extends in the third direction (Z-axis direction) and is in communication with the second accommodating groove 119. In the third direction, the fourth air vent 16 and the third air vent 15 are able to be spaced apart and opposite to each other, and the hole axis of the fourth air vent 16 extends in the third direction and is in communication with the second accommodating cavity.

Driven by the fan 519 of the cooling source 51, the external cold air enters the second accommodating cavity of the main housing 11 from the fourth air vent 16 of the cover plate 12 of the housing 10, flows from the first layer 511 of the cooling source 51 to the second layer 512 of the cooling source 51 via the cooling source 51, and flows out from the third air vent 15 of the first connection wall 111 of the housing 10. In this way, the external cold air flows from the cover plate 12 of the housing 10 to the first connection wall 111 of the housing 10. In this way, the third air vent 15 and the fourth air vent 16 are used to ensure that the external cold air can perform heat dissipation for the cooling source 51, thereby improving heat dissipation efficiency of the fan 519 for the heat exchanger 518. Further, this helps improve efficiency of performing heat dissipation by the cooling source 51 for the coolant flowing in the cooling hose 52, implements fast heat dissipation for the cooling source 51, and helps improve a heat dissipation capability of the terminal device 100.

In some other embodiments, the external cold air may alternatively flow into the second accommodating cavity from the first connection wall 111 of the housing 10, and flow out of the second accommodating cavity from the cover plate 12 of the housing 10. Specifically, the external cold air may enter the second accommodating cavity of the housing 10 from the third air vent 15 of the first connection wall 111 of the housing 10, flows from the second layer 512 of the cooling source 51 to the first layer 511 of the cooling source 51 via the cooling source 51, and flows out from the fourth air vent 16 of the cover plate 12.

As shown in FIG. 10 and FIG. 14, in yet other embodiments, a part of the external cold air may flow into the second accommodating cavity from the second connection wall 112 of the housing 10, and flow out of the second accommodating cavity from the first connection wall 111 of the housing 10. The other part of the external cold air flows into the second accommodating cavity from the third connection wall 113 of the housing 10, and flows out of the second accommodating cavity from the first connection wall 111 of the housing 10. It should be noted that a direction D4 and a direction D5 shown in FIG. 14 are simple examples of air directions of the external cold air in this embodiment. A structure of the housing 10 shown in FIG. 14 is different from a structure of the housing 10 shown in FIG. 11.

Specifically, the second connection wall 112 is provided with the first air vent 13, and the third connection wall 113 is provided with the second air vent 14. For specific descriptions of the first air vent 13 and the second air vent 14, refer to related descriptions of the housing 10 shown in FIG. 11. Details are not described again. The first connection wall 111 is provided with a third air vent 15. The third air vent 15 extends in the Z-axis direction and has two openings. One opening is located on the first mating surface 1111 of the first connection wall 111, and the other opening is located on a surface that is of the first connection wall 111 and that faces away from the first mating surface 1111. In other words, a hole axis of the third air vent 15 extends in the third direction (Z-axis direction) and is in communication with the second accommodating groove 119. When the cover plate 12 rotates relative to the main housing 11 to the closed state, the cover plate 12 covers the second accommodating groove 119 to form the second accommodating cavity, and the second accommodating cavity is exposed outside the housing 10 through the first air vent 13, the second air vent 14, and the third air vent 15.

It may be understood that the housing 10 is provided with the air vent, and the ventilation hole is in communication with the second accommodating cavity. Specifically, the main housing 11 is provided with the first air vent 13, the second air vent 14, and the third air vent 15. In the second direction (X-axis direction), the first air vent 13 and the second air vent 14 are spaced apart and opposite to each other, and are both in communication with the second accommodating groove 119. The hole axis of the third air vent 15 extends in the third direction (Z-axis direction) and is in communication with the second accommodating groove 119.

Driven by the fan 519 of the cooling source 51, a part of the external cold air enters the second accommodating cavity of the housing 10 from the first air vent 13 of the second connection wall 112 of the housing 10, flows from the first layer 511 of the cooling source 51 to the second layer 512 of the cooling source 51 via the cooling source 51, and flows out from the third air vent 15 of the first connection wall 111 of the housing 10. The other part of the external cold air enters the second accommodating cavity of the housing 10 from the second air vent 14 of the third connection wall 113 of the housing 10, flows from the first layer 511 of the cooling source 51 to the second layer 512 of the cooling source 51 via the cooling source 51, and flows out from the third air vent 15 of the first connection wall 111 of the housing 10.

In this way, the part of the external cold air flows from the second connection wall 112 of the housing 10 to the first connection wall 111 of the housing 10, and the other part of the external cold air flows from the third connection wall 113 of the housing 10 to the first connection wall 111 of the housing 10. In this way, the third air vent 15 and the sixth air vent 16 are used to ensure that the external cold air can perform heat dissipation for the cooling source 51, thereby improving heat dissipation efficiency of the fan 519 for the heat exchanger 518. Further, this helps improve efficiency of performing heat dissipation by the cooling source 51 for the coolant flowing in the cooling hose 52, implements fast heat dissipation for the cooling source 51, and helps improve a heat dissipation capability of the terminal device 100.

As shown in FIG. 3, FIG. 4, and FIG. 10, in some embodiments, the auxiliary power supply 53 is electrically connected to the cooling source 51 in a manner that includes but is not limited to a conducting wire. Specifically, the auxiliary power supply 53 is electrically connected to the control unit 519a. The auxiliary power supply 53 is fastened to the cover plate 12. Specifically, the auxiliary power supply 53 is fixedly accommodated in the fourth mounting hole 127 of the cover plate 12. The auxiliary power supply 53 is electrically connected to the control circuit board 20 in a manner that includes but is not limited to a conducting wire. It may be understood that in the Y-axis direction, the auxiliary power supply 53 is located on a side of the boss 123, and is spaced apart apart from the boss 123. It may be understood that when the cover plate 12 rotates relative to the main housing 11 to the closed state, that is, when the cover plate 12 covers the first accommodating groove 118 to form the first accommodating cavity, the auxiliary power supply 53 is accommodated in the first accommodating cavity.

The auxiliary power supply is configured to output an output direct current. A voltage value of the output direct current is less than a voltage value of the charging direct current, and the output direct current is a low-voltage current. The output direct current may be transmitted to the control unit 519a of the cooling source 51 and the control circuit board 20. The auxiliary power supply 53 is configured to supply power to the cooling source 51 and the control circuit board 20. The output direct current may be transmitted from the control unit 519a to the water pump 517a, the heat exchanger 518, and the fan 519. The auxiliary power supply 53 is configured to supply power to the water pump 517a, the heat exchanger 518, the fan 519, and the control unit 519a.

Because the auxiliary power supply 53 is accommodated in the first accommodating cavity, the auxiliary power supply 53 can be raised. When the external environment changes (for example, when the flood disaster occurs), a risk of a short circuit of the auxiliary power supply 53 can be delayed. This helps improve the use safety of the terminal device 100, helps improve the environmental weather resistance of the terminal device 100, and helps prolong the service life of the terminal device 100. In addition, a design in which the auxiliary power supply 53 is fastened to the cover plate 12 prevents the auxiliary power supply 53 from occupying space of the main housing 11, thereby greatly improving the space utilization of the housing 10, facilitating the miniaturization designs of the housing 10 and the terminal device 100, and facilitating maintenance of the auxiliary power supply 53.

It may be understood that, because each component in the cooling source 51 transmits the output direct current (low-voltage current), each component in the cooling source 51 is a direct-current low-voltage component. In addition, because the power distribution device 31 transmits the charging direct current (high current), the power distribution device 31 is a high-current power device.

As shown in FIG. 1, FIG. 2, and FIG. 3, in the terminal device 100 provided in embodiments of this application, the charging direct current (high current) output by the power unit device 200 may be transmitted to the electric vehicle 2000, to implement fast charging on the electric vehicle 2000. The power distribution device 31 of the power distribution component 30 may be electrically connected to the power unit device 200, and the connector 41 may be connected to the electric vehicle 2000. The power unit device 200 may output the charging direct current (high current) to the power distribution device 31, and the charging direct current is transmitted from the power distribution device 31 to the electric vehicle 2000 through the connector 41 to implement fast charging. In the working process of the terminal device 100, because the power distribution device 31 and the connector 41 transmit the charging direct current (high current), it is very likely that the power distribution device 31 and the connector 41 quickly generate a large amount of heat. As a result, temperatures of the connector 41 and the power distribution device 31 rise excessively fast. According to the terminal device 100 provided in embodiments of this application, the coolant may flow in the cooling hose 52, the cooling source 51 may perform heat dissipation for the coolant, and the heat dissipated by the connector 41 may be absorbed via the coolant, so that fast heat dissipation can be implemented for the connector 41, thereby facilitating fast heat dissipation for the power distribution device 31. This helps improve heat dissipation efficiency of the terminal device 100, and greatly improves the heat dissipation capability of the terminal device 100.

In addition, the first accommodating groove 118 and the second accommodating groove 119 of the main housing 11 are sequentially arranged and spaced apart in the gravity direction (Y-axis negative direction), and the first accommodating cavity and the second accommodating cavity may be sequentially arranged and spaced apart in the gravity direction. In addition, the power distribution device 31 is accommodated in the first accommodating groove 118, the cooling source 51 is accommodated in the second accommodating groove 119, the power distribution device 31 is accommodated in the first accommodating cavity, and the cooling source 51 is accommodated in the second accommodating cavity. In this way, on one hand, the cooling source 51 and the power distribution device 31 are independent of each other and do not affect each other. This helps improve stability of an internal structure of the terminal device 100, and helps improve performance of the terminal device 100. On the other hand, the power distribution device 31 can be raised. When the external environment changes (for example, when the flood disaster occurs), a risk of a short circuit of the power distribution device 31 can be delayed. This helps improve the use safety of the terminal device 100, helps improve the environmental weather resistance of the terminal device 100, and helps prolong the service life of the terminal device 100. In addition, in such a design, the internal structure is simple and space utilization is high, which facilitates the miniaturization design of the terminal device 100.

Refer to FIG. 2, FIG. 3, and FIG. 4 again. In some embodiments, the auxiliary component 60 is fastened to the cover plate 12, electrically connected to the control circuit board 20, and electrically connected to the auxiliary power supply 53. The auxiliary component 60 includes a heat dissipation member 61, a display member 62, a card reader 63, and an electricity meter 64. The heat dissipation member 61 is fastened to the cover plate 12, electrically connected to the control circuit board 20, and electrically connected to the auxiliary power supply 53. Specifically, the heat dissipation member 61 is fixedly accommodated in the fifth mounting hole 128 of the cover plate 12 in a manner that includes but is not limited to welding or adhesive bonding. In the Y-axis direction, the heat dissipation member 61 is located between the boss 123 and the auxiliary power supply 53, and is spaced apart apart from the boss 123 and the auxiliary power supply 53. The heat dissipation member 61 is electrically connected to the control circuit board 20 and the auxiliary power supply 53 in a manner that includes but is not limited to a conducting wire. The auxiliary power supply 53 is configured to supply power to the heat dissipation member 61. It may be understood that the control circuit board 20 is electrically connected to the power distribution device 31, the cooling source 51, and the heat dissipation member 61. The auxiliary power supply 53 is electrically connected to the cooling source 51, the control circuit board 20, and the heat dissipation member 61.

When the cover plate 12 rotates relative to the main housing 11 to the closed state, that is, when the cover plate 12 covers the first accommodating groove 118 of the main housing 11 to form the first accommodating cavity, the heat dissipation member 61 is accommodated in the first accommodating cavity. In a third direction (that is, the Z-axis direction), projection of the heat dissipation member 61 accommodated in the first accommodating cavity overlaps projection of the power distribution device 31, and the heat dissipation member 61 and the power distribution device 31 are spaced apart. The heat dissipation member 61 is configured to perform heat dissipation for the power distribution device 31. For example, the heat dissipation member 61 is a fan.

Heat dissipation may be performed for the power distribution device 31 via the heat dissipation member 61. This helps eliminate a local hot spot of an internal component of the terminal device 100, facilitates even heat dissipation for the terminal device 100, and ensures an even temperature inside the terminal device 100. A design in which the heat dissipation member 61 is fastened to the cover plate 12 not only prevents the heat dissipation member 61 from occupying space of the first accommodating groove 118 of the main housing 11, but also greatly improves the space utilization of the housing 10, facilitates the miniaturization design of the housing 10, and facilitates maintenance of the heat dissipation member 61. In addition, because in the third direction, the projection of the heat dissipation member 61 accommodated in the first accommodating cavity overlaps the projection of the power distribution device 31, the heat dissipation member 61 can be raised. When the external environment changes (for example, when the flood disaster occurs), a risk of a short circuit of the heat dissipation member 61 can be delayed. This helps improve the use safety of the terminal device 100, helps improve the environmental weather resistance of the terminal device 100, and helps prolong the service life of the terminal device 100.

For example, the display member 62 is a display screen. In some other embodiments, the display member 62 may alternatively be a display light board. This is not specifically limited in this application. The display member 62 is fastened to the cover plate 12, electrically connected to the control circuit board 20, and electrically connected to the auxiliary power supply 53. Specifically, the display member 62 is fixedly accommodated in the first mounting hole 124 of the cover plate 12 in a manner that includes but is not limited to welding or adhesive bonding. In the Y-axis direction, the display member 62 is located between the boss 123 and the heat dissipation member 61, and is spaced apart apart from the boss 123 and the heat dissipation member 61. The display member 62 is exposed outside the housing 10. The display member 62 is electrically connected to the control circuit board 20 and the auxiliary power supply 53 in a manner that includes but is not limited to a conducting wire. The auxiliary power supply 53 is configured to supply power to the display member 62.

The display member 62 may be configured to display a status of the terminal device 100, for example, display a charging state, a standby state, a faulty state, or a reserved state of the terminal device 100, or an amount of electricity that has been charged for the electric vehicle 2000 (as shown in FIG. 1). The display member 62 may further have a touch control function, so that the user operates the terminal device 100. A design of the display member 62 not only helps the user to use the terminal device 100 to charge the electric vehicle 2000 in a simple and convenient manner, but also helps the user to maintain the terminal device 100.

The card reader 63 is fastened to the cover plate 12, electrically connected to the control circuit board 20, and electrically connected to the auxiliary power supply 53. Specifically, the card reader 63 is fixedly accommodated in the second mounting hole 125 of the cover plate 12 in a manner that includes but is not limited to welding or adhesive bonding. In the Y-axis direction, the card reader 63 is located between the display member 62 and the auxiliary power supply 53, and is spaced apart apart from the display member 62 and the auxiliary power supply 53. In the width direction of the cover plate 12, the card reader 63 is located at an end of the heat dissipation member 61, and is spaced apart apart from the heat dissipation member 61. The card reader 63 is exposed outside the housing 10. The card reader 63 is configured to identify an IC card (Integrated Circuit Card, integrated circuit card). In this way, the terminal device 100 may identify an IC card like a related bank card or charging card of the user via the card reader 63, and perform corresponding charging and fee deduction.

The electricity meter 64 is fastened to the cover plate 12, electrically connected to the control circuit board 20, and electrically connected to the auxiliary power supply 53. Specifically, the electricity meter 64 is fixedly accommodated in the third mounting hole 126 of the cover plate 12 in a manner that includes but is not limited to welding or adhesive bonding. In the Y-axis direction, the electricity meter 64 is located between the heat dissipation member 61 and the auxiliary power supply 53, and is spaced apart apart from the heat dissipation member 61 and the auxiliary power supply 53. The electricity meter 64 is electrically connected to the control circuit board 20 and the auxiliary power supply 53 in a manner that includes but is not limited to a conducting wire. The auxiliary power supply 53 is configured to supply power to the electricity meter 64. The electricity meter 64 is configured to implement metering of charging the electric vehicle 2000 by the terminal device 100.

It may be understood that, in the Y-axis negative direction, the display member 62, the heat dissipation member 61, the card reader 63, the electricity meter 64, and the auxiliary power supply 53 are all located on a side of the boss 123 of the cover plate 12. A design of the boss 123 can avoid a case in which water accumulated on the top (that is, a surface that is of the cover plate 12 and that is in the Y-axis positive direction) of the cover plate 12 is in contact with components (the display member 62, the heat dissipation member 61, the card reader 63, the electricity meter 64, and the auxiliary power supply 53 in this embodiment) disposed on the cover plate 12 when the cover plate 12 rotates relative to the main housing 11, to avoid a short circuit of the component disposed on the cover plate 12. This helps improve the safety of the terminal device 100, helps improve the environmental weather resistance of the terminal device 100, and helps prolong the service life of the terminal device 100.

It may be understood that, when the cover plate 12 rotates relative to the main housing 11 to the closed state, that is, when the cover plate 12 covers the first accommodating groove 118 to form the first accommodating cavity, the auxiliary power supply 53, the heat dissipation member 61, the display member 62, the card reader 63, and the electricity meter 64 are all accommodated in the first accommodating cavity. In this way, the auxiliary power supply 53, the heat dissipation member 61, the display member 62, the card reader 63, and the electricity meter 64 can be raised to ensure that when the external environment changes (for example, when the flood disaster occurs), a risk of short circuits of the auxiliary power supply 53, the heat dissipation member 61, the display member 62, the card reader 63, and the electricity meter 64 can be delayed. This helps improve the use safety of the terminal device 100, helps improve the environmental weather resistance of the terminal device 100, and helps prolong the service life of the terminal device 100. In addition, in such a design, the internal structure is simple and space utilization is high, which facilitates the miniaturization design of the terminal device 100.

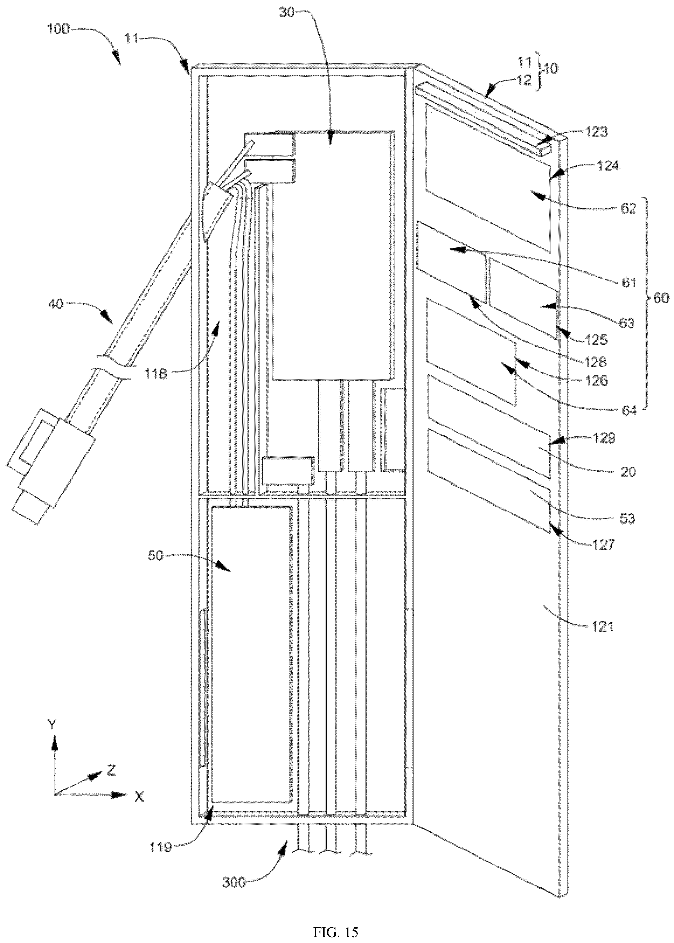

Refer to FIG. 15 with reference to FIG. 1 and FIG. 3. FIG. 15 is a diagram of a three-dimensional structure of the terminal device 100 shown in FIG. 2 in an open state in a case of the terminal device being in cooperation with the cable component 300 according to another embodiment.

In some embodiments, the terminal device 100 includes the housing 10, the control circuit board 20, the power distribution component 30, the charging component 40, the cooling component 50, and the auxiliary component 60. The control circuit board 20 is accommodated in the housing 10. The power distribution component 30 is accommodated in the housing 10, and is electrically connected to the control circuit board 20. The charging component 40 penetrates into the housing 10, and is connected to the power distribution component 30. The cooling component 50 is accommodated in the housing 10, and is electrically connected to the control circuit board 20. The cooling component 50 is fastened to the charging component 40, and the cooling component 50 is configured to perform heat dissipation for the charging component 40 and the power distribution component 30. The auxiliary component 60 is accommodated in the housing 10, and is electrically connected to the control circuit board 20. The cable component 300 penetrates into the housing 10, and is accommodated in the housing 10 and connected to the power distribution component 30. The charging component 40 is connected to the electric vehicle 2000.

The housing 10 includes the main housing 11 and the cover plate 12, and the cover plate 12 is rotatably connected to a side of the main housing 11. The cover plate 12 may rotate relative to the main housing 11, so that the housing 10 can switch between the open state and the closed state. Correspondingly, the terminal device 100 switches between the open state and the closed state. For details, refer to the related descriptions of the housing 10 in the embodiment shown in FIG. 3. Therefore, details are not described again.

The main housing 11 includes the first accommodating groove 118 and the second accommodating groove 119, and the first accommodating groove 118 and the second accommodating groove 119 are sequentially spaced apart in the Y-axis negative direction. For details, refer to the related descriptions of the main housing 11 in the embodiment shown in FIG. 3. Therefore, details are not described again. The cover plate 12 includes the first mounting surface 121. When the cover plate 12 rotates relative to the main housing 11 to the closed state, the first mounting surface 121 faces the main housing 11. The cover plate 12 is provided with the boss 123, the first mounting hole 124, the second mounting hole 125, the third mounting hole 126, the fourth mounting hole 127, and the fifth mounting hole 128. For structures and position relationships of the boss 123, the first mounting hole 124, the second mounting hole 125, the third mounting hole 126, the fourth mounting hole 127, and the fifth mounting hole 128, refer to related descriptions of the cover plate 12 in the embodiment shown in FIG. 3. Therefore, details are not described again.

A structure of the cover plate 12 of the terminal device 100 shown in this embodiment is similar to a structure of the cover plate 12 of the terminal device 100 shown in FIG. 3. A difference between the cover plate 12 of the terminal device 100 shown in this embodiment and the cover plate 12 of the terminal device 100 shown in FIG. 3 lies in that the cover plate 12 shown in this embodiment is further provided with a sixth mounting hole 129. In the Y-axis direction, the sixth mounting hole 129 is located between the third mounting hole 126 and the fourth mounting hole 127, and is spaced apart from the third mounting hole 126 and the fourth mounting hole 127. The sixth mounting hole 129 extends in the thickness direction of the cover plate 12 and has an opening. The opening is located on the first mounting surface 121. When the cover plate 12 rotates relative to the main housing 11 to the closed state, orthographic projection that is of the sixth mounting hole 129 and that is on the main housing 11 is located in the first accommodating groove 118.

The control circuit board 20 is fastened to the cover plate 12. Specifically, the control circuit board 20 is fixedly accommodated in the sixth mounting hole 129 of the cover plate 12. When the cover plate 12 rotates relative to the main housing 11 to the closed state, that is, when the cover plate 12 covers the first accommodating groove 118 to form the first accommodating cavity, the control circuit board 20 is accommodated in the first accommodating cavity.

For structures and connection relationships of the power distribution component 30, the charging component 40, and the cooling component 50, refer to related descriptions in the embodiment shown in FIG. 3. Therefore, details are not described again. The cooling component 50 includes the auxiliary power supply 53. The auxiliary power supply 53 is fastened to the cover plate 12, and is electrically connected to the control circuit board 20. Specifically, the auxiliary power supply 53 is fixedly accommodated in the fourth mounting hole 127, and is electrically connected to the control circuit board 20. When the cover plate 12 rotates relative to the main housing 11 to the closed state, that is, when the cover plate 12 covers the first accommodating groove 118 to form the first accommodating cavity, the auxiliary power supply 53 is accommodated in the first accommodating cavity. The auxiliary component 60 includes the heat dissipation member 61, the display member 62, the card reader 63, and the electricity meter 64. The heat dissipation member 61, the display member 62, the card reader 63, and the electricity meter 64 are all fastened to the cover plate 12, and are all electrically connected to the auxiliary power supply 53 and the control circuit board 20. Specifically, the heat dissipation member 61 is fixedly accommodated in the fifth mounting hole 128, the display member 62 is fixedly accommodated in the first mounting hole 124, the card reader 63 is fixedly accommodated in the second mounting hole 125, and the electricity meter 64 is fixedly accommodated in the third mounting hole 126. When the cover plate 12 rotates relative to the main housing 11 to the closed state, that is, when the cover plate 12 covers the first accommodating groove 118 to form the first accommodating cavity, the auxiliary power supply 53, the heat dissipation member 61, the display member 62, the card reader 63, and the electricity meter 64 are all accommodated in the first accommodating cavity.

It may be understood that in this embodiment, in the Y-axis direction, the control circuit board 20 is located between the auxiliary power supply 53 and the electricity meter 64, and is spaced apart apart from the auxiliary power supply 53 and the electricity meter 64. In some other embodiments, the control circuit board 20 may alternatively be located between the display member 62 and the card reader 63 in the Y-axis direction, or may be located between the card reader 63 and the electricity meter 64. The control circuit board 20 may be disposed at different positions of the cover plate 12. This is not specifically limited in this application.

A structure of the terminal device 100 shown in this embodiment is similar to a structure of the terminal device 100 shown in FIG. 3. A difference between the terminal device 100 shown in this embodiment and the terminal device 100 shown in FIG. 3 lies in that the control circuit board 20 is disposed at different positions. In this embodiment, the control circuit board 20 is fastened to the cover plate 12. Specifically, the control circuit board 20 is fixedly accommodated in the sixth mounting hole 129 of the cover plate 12. In addition, when the cover plate 12 rotates relative to the main housing 11 to the closed state, that is, when the cover plate 12 covers the first accommodating groove 118 to form the first accommodating cavity, the control circuit board 20 is accommodated in the first accommodating cavity.

In this way, because the control circuit board 20 is accommodated in the first accommodating cavity, the control circuit board 20 can be raised. When the external environment changes (for example, when the flood disaster occurs), the risk of the short circuit of the control circuit board 20 can be delayed. This helps improve the use safety of the terminal device 100, helps improve the environmental weather resistance of the terminal device 100, and helps prolong the service life of the terminal device 100. In addition, a design in which the control circuit board 20 is fastened to the cover plate 12 can prevent the control circuit board 20 from occupying the space of the first accommodating groove 118 of the main housing 11, help reduce a height (a size in the Y-axis direction) of the main housing 11, help reduce heights of the housing 10 and the terminal device 100, and facilitate the miniaturization designs of the housing 10 and the terminal device 100.

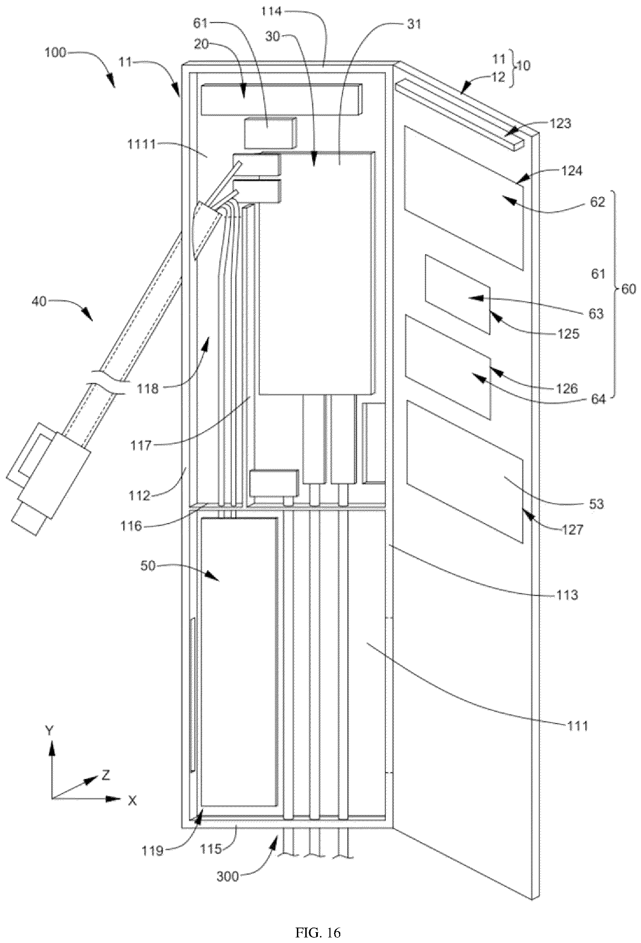

Refer to FIG. 16 with reference to FIG. 1 and FIG. 3. FIG. 16 is a diagram of a three-dimensional structure of the terminal device 100 shown in FIG. 2 in an open state in a case of the terminal device being in cooperation with the cable component 300 according to still another embodiment.

In some embodiments, the terminal device 100 includes the housing 10, the control circuit board 20, the power distribution component 30, the charging component 40, the cooling component 50, and the auxiliary component 60. The control circuit board 20 is accommodated in the housing 10. The power distribution component 30 is accommodated in the housing 10, and is electrically connected to the control circuit board 20. The charging component 40 penetrates into the housing 10, and is connected to the power distribution component 30. The cooling component 50 is accommodated in the housing 10, and is electrically connected to the control circuit board 20. The cooling component 50 is fastened to the charging component 40, and the cooling component 50 is configured to perform heat dissipation for the charging component 40 and the power distribution component 30. The auxiliary component 60 is accommodated in the housing 10, and is electrically connected to the control circuit board 20. The cable component 300 penetrates into the housing 10, and is accommodated in the housing 10 and connected to the power distribution component 30. The charging component 40 is connected to the electric vehicle 2000.

The housing 10 includes the main housing 11 and the cover plate 12, and the cover plate 12 is rotatably connected to a side of the main housing 11. The cover plate 12 may rotate relative to the main housing 11, so that the housing 10 can switch between the open state and the closed state. Correspondingly, the terminal device 100 switches between the open state and the closed state. For details, refer to the related descriptions of the housing 10 in the embodiment shown in FIG. 3. Therefore, details are not described again.

The main housing 11 includes the first connection wall 111, the second connection wall 112, the third connection wall 113, the fourth connection wall 114, the fifth connection wall 115, the spacer plate 116, and the baffle plate 117. The first connection wall 111 includes the first mating surface 1111. The second connection wall 112, the third connection wall 113, the fourth connection wall 114, the fifth connection wall 115, the spacer plate 116, and the baffle plate 117 are all fastened to the first mating surface 1111 of the first connection wall 111. The first connection wall 111, the second connection wall 112, the fourth connection wall 114, the third connection wall 113, and the spacer plate 116 are enclosed to form the first accommodating groove 118. The first connection wall 111, the second connection wall 112, the fifth connection wall 115, the third connection wall 113, and the spacer plate 116 are enclosed to form the second accommodating groove 119. The first accommodating groove 118 and the second accommodating groove 119 are sequentially spaced apart in the Y-axis negative direction. The baffle plate 117 is fastened to the spacer plate 116, and is located in the first accommodating groove 118. The first accommodating groove 118 includes the mating groove surface. For a structure and a connection relationship of the foregoing feature, refer to the related descriptions in the embodiment shown in FIG. 3. Therefore, details are not described again.

The cover plate 12 is rotatably connected to the third connection wall 113. The cover plate 12 is provided with the boss 123, the first mounting hole 124, the second mounting hole 125, the third mounting hole 126, and the fourth mounting hole 127. For a structure and a position relationship of the foregoing feature, refer to the related descriptions of the cover plate 12 in the embodiment shown in FIG. 3. Therefore, details are not described again. A structure of the cover plate 12 shown in this embodiment is similar to the structure of the cover plate 12 in the embodiment shown in FIG. 3. A difference between the cover plate 12 shown in this embodiment and the cover plate 12 in the embodiment shown in FIG. 3 lies in that the fifth mounting hole 128 is omitted from the cover plate 12 shown in this embodiment.

The control circuit board 20 is fastened to the first mating surface 1111 of the first connection wall 111. Specifically, the control circuit board 20 is accommodated in the first accommodating groove 118, and is fastened to the mating groove surface of the first accommodating groove 118. In addition, in the X-axis direction, the control circuit board 20 is located between the baffle plate 117 and the fourth connection wall 114, and is spaced apart apart from the baffle plate 117 and the fourth connection wall 114. For details, refer to the related descriptions of the control circuit board 20 in the embodiment shown in FIG. 3. Therefore, details are not described again.

For a structure and a connection relationship of the power distribution component 30, refer to related descriptions in the embodiment shown in FIG. 3. Therefore, details are not described again. The power distribution component 30 includes the power distribution device 31. The power distribution device 31 is fastened to the first mating surface 1111 of the first connection wall 111. Specifically, the power distribution device 31 is accommodated in the first accommodating groove 118, and is fastened to the mating groove surface of the first accommodating groove 118. In the Y-axis direction, the power distribution device 31 is located between the control circuit board 20 and the spacer plate 116, and is spaced apart apart from the control circuit board 20 and the spacer plate 116. In the X-axis direction, the power distribution device 31 is located between the baffle plate 117 and the third connection wall 113, and is spaced apart apart from the baffle plate 117 and the third connection wall 113. The power distribution device 31 is electrically connected to the control circuit board 20.

For structures and connection relationships of the charging component 40 and the cooling component 50, refer to related descriptions in the embodiment shown in FIG. 3. Therefore, details are not described again. The cooling component 50 includes the auxiliary power supply 53. The auxiliary power supply 53 is fixedly accommodated in the fourth mounting hole 127 of the cover plate 12, and is electrically connected to the control circuit board 20. When the cover plate 12 rotates relative to the main housing 11 to the closed state, the auxiliary power supply 53 is accommodated in the first accommodating groove 118.

The auxiliary component 60 includes the heat dissipation member 61, the display member 62, the card reader 63, and the electricity meter 64. The heat dissipation member 61 is fastened to the first connection wall 111. The heat dissipation member 61 is fastened to the first mating surface 1111 of the first connection wall 111. Specifically, the heat dissipation member 61 is accommodated in the first accommodating groove 118, and is fastened to the mating groove surface of the first accommodating groove 118. In the Y-axis direction, the heat dissipation member 61 is located between the control circuit board 20 and the power distribution device 31, and is spaced apart apart from the control circuit board 20 and the power distribution device 31. The heat dissipation member 61 is electrically connected to the control circuit board 20 and the auxiliary power supply 53. For example, the heat dissipation member 61 is a fan. It may be understood that, in the first direction (that is, the Y-axis direction), the heat dissipation member 61 is located on a side that is of the power distribution device 31 and that faces away from the second accommodating groove 119.

The display member 62 is fixedly accommodated in the first mounting hole 124, and is electrically connected to the control circuit board 20 and the auxiliary power supply 53. The card reader 63 is fixedly accommodated in the second mounting hole 125, and is electrically connected to the control circuit board 20 and the auxiliary power supply 53. The electricity meter 64 is fixedly accommodated in the third mounting hole 126, and is electrically connected to the control circuit board 20 and the auxiliary power supply 53. When the cover plate 12 rotates relative to the main housing 11 to the closed state, the display member 62, the card reader 63, and the electricity meter 64 are all accommodated in the first accommodating groove 118.

A structure of the terminal device 100 shown in this embodiment is similar to the structure of the terminal device 100 shown in FIG. 3. A difference between the terminal device 100 shown in this embodiment and the terminal device 100 shown in FIG. 3 lies in that the heat dissipation member 61 of the auxiliary component 60 is disposed at different positions. In this embodiment, the heat dissipation member 61 is fastened to the first mating surface 1111 of the first connection wall 111. Specifically, the heat dissipation member 61 is accommodated in the first accommodating groove 118. The heat dissipation member 61 is fastened to the mating groove surface of the first accommodating groove 118, and in the Y-axis direction, is located on the side that is of the power distribution device 31 and that faces away from the second accommodating groove 119, and is spaced apart apart from the power distribution device 31.

Because the heat dissipation member 61 is fastened to the mating groove surface of the first accommodating groove 118, and the heat dissipation member 61 is accommodated in the first accommodating groove 118 of the main housing 11, the heat dissipation member 61 can be raised. When the external environment changes (for example, when the flood disaster occurs), the risk of the short circuit of the heat dissipation member 61 can be delayed. This helps improve the use safety of the terminal device 100, helps improve the environmental weather resistance of the terminal device 100, and helps prolong the service life of the terminal device 100. In addition, a design in which the heat dissipation member 61 is located between the control circuit board 20 and the power distribution device 31 helps the heat dissipation member 61 to perform heat dissipation synchronously for the power distribution device 31 and the control circuit board 20. This helps eliminate a local hot spot of an internal component of the terminal device 100, facilitates even heat dissipation for the terminal device 100, and ensures an even temperature inside the terminal device 100.

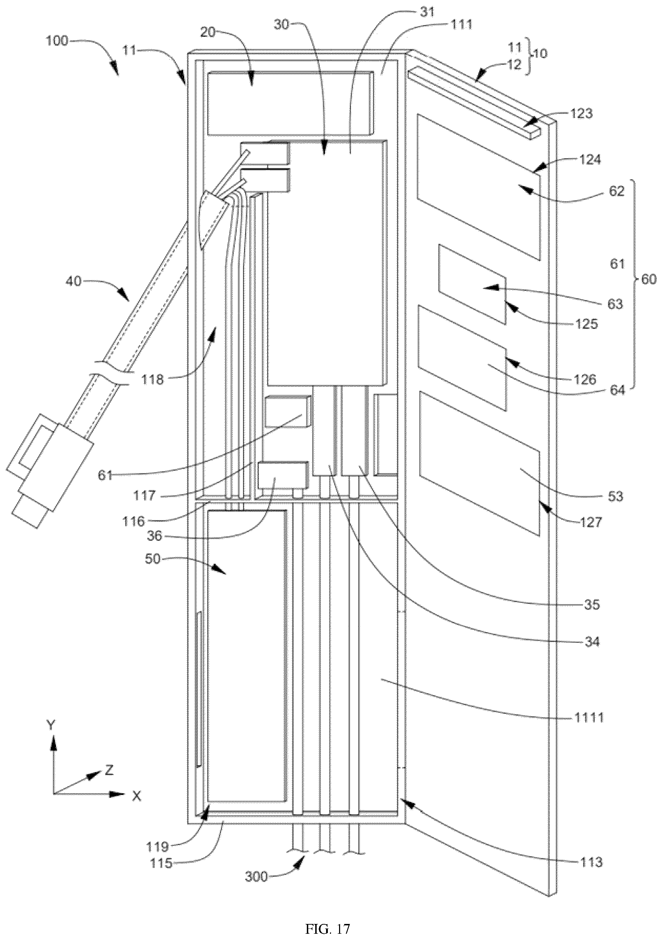

Refer to FIG. 17 with reference to FIG. 1 and FIG. 3. FIG. 17 is a diagram of a three-dimensional structure of the terminal device 100 shown in FIG. 2 in an open state in a case of the terminal device being in cooperation with the cable component 300 according to yet another embodiment.

In some embodiments, the terminal device 100 includes the housing 10, the control circuit board 20, the power distribution component 30, the charging component 40, the cooling component 50, and the auxiliary component 60. The control circuit board 20 is accommodated in the housing 10. The power distribution component 30 is accommodated in the housing 10, and is electrically connected to the control circuit board 20. The charging component 40 penetrates into the housing 10, and is connected to the power distribution component 30. The cooling component 50 is accommodated in the housing 10, and is electrically connected to the control circuit board 20. The cooling component 50 is fastened to the charging component 40, and the cooling component 50 is configured to perform heat dissipation for the charging component 40 and the power distribution component 30. The auxiliary component 60 is accommodated in the housing 10, and is electrically connected to the control circuit board 20. The cable component 300 penetrates into the housing 10, and is accommodated in the housing 10 and connected to the power distribution component 30. The charging component 40 is connected to the electric vehicle 2000.

The housing 10 includes the main housing 11 and the cover plate 12, and the cover plate 12 is rotatably connected to a side of the main housing 11. The cover plate 12 may rotate relative to the main housing 11, so that the housing 10 can switch between the open state and the closed state. Correspondingly, the terminal device 100 switches between the open state and the closed state. For details, refer to the related descriptions of the housing 10 in the embodiment shown in FIG. 3. Therefore, details are not described again.

The main housing 11 includes the first connection wall 111, the second connection wall 112, the third connection wall 113, the fourth connection wall 114, the fifth connection wall 115, the spacer plate 116, and the baffle plate 117. The first connection wall 111 includes the first mating surface 1111. The second connection wall 112, the third connection wall 113, the fourth connection wall 114, the fifth connection wall 115, the spacer plate 116, and the baffle plate 117 are all fastened to the first mating surface 1111 of the first connection wall 111. The first connection wall 111, the second connection wall 112, the fourth connection wall 114, the third connection wall 113, and the spacer plate 116 are enclosed to form the first accommodating groove 118. The first connection wall 111, the second connection wall 112, the fifth connection wall 115, the third connection wall 113, and the spacer plate 116 are enclosed to form the second accommodating groove 119. The first accommodating groove 118 and the second accommodating groove 119 are sequentially spaced apart in the Y-axis negative direction. The baffle plate 117 is fastened to the spacer plate 116, and is located in the first accommodating groove 118. The first accommodating groove 118 includes the mating groove surface. For a structure and a connection relationship of the foregoing feature, refer to the related descriptions in the embodiment shown in FIG. 3. Therefore, details are not described again.

The cover plate 12 is rotatably connected to the third connection wall 113. The cover plate 12 is provided with the boss 123, the first mounting hole 124, the second mounting hole 125, the third mounting hole 126, and the fourth mounting hole 127. For a structure and a position relationship of the foregoing feature, refer to the related descriptions of the cover plate 12 in the embodiment shown in FIG. 3. Therefore, details are not described again. It may be understood that a structure of the cover plate 12 shown in this embodiment is similar to the structure of the cover plate 12 in the embodiment shown in FIG. 3. A difference between the cover plate 12 shown in this embodiment and the cover plate 12 in the embodiment shown in FIG. 3 lies in that the fifth mounting hole 128 is omitted from the cover plate 12 shown in this embodiment.

The control circuit board 20 is fastened to the first mating surface 1111 of the first connection wall 111. Specifically, the control circuit board 20 is accommodated in the first accommodating groove 118, and is fastened to the mating groove surface of the first accommodating groove 118. In addition, in the Y-axis direction, the control circuit board 20 is located between the baffle plate 117 and the fourth connection wall 114, and is spaced apart apart from the baffle plate 117 and the fourth connection wall 114. For details, refer to the related descriptions of the control circuit board 20 in the embodiment shown in FIG. 3. Therefore, details are not described again.

For the structure and the connection relationship of the power distribution component 30, refer to related descriptions in the embodiment shown in FIG. 3. Therefore, details are not described again. The power distribution component 30 includes the power distribution device 31, the third terminal 34, the fourth terminal 35, and the fifth terminal 36. The power distribution device 31 is fastened to the first mating surface 1111 of the first connection wall 111. Specifically, the power distribution device 31 is accommodated in the first accommodating groove 118, and is fastened to the mating groove surface of the first accommodating groove 118. In the Y-axis direction, the power distribution device 31 is located between the control circuit board 20 and the spacer plate 116, and is spaced apart apart from the control circuit board 20 and the spacer plate 116. In the X-axis direction, the power distribution device 31 is located between the baffle plate 117 and the third connection wall 113, and is spaced apart apart from the baffle plate 117 and the third connection wall 113. The power distribution device 31 is electrically connected to the control circuit board 20.

In the Y-axis direction, the third terminal 34 is connected to the end that is of the power distribution device 31 and that faces away from the control circuit board 20. In the X-axis direction, the third terminal 34 is located between the baffle plate 117 and the third connection wall 113, and is spaced apart apart from the baffle plate 117 and the third connection wall 113. In the Y-axis direction, the third terminal 34 is located between the power distribution device 31 and the spacer plate 116, and is spaced apart apart from the spacer plate 116. In the Y-axis direction, the fourth terminal 35 is connected to the end that is of the power distribution device 31 and that faces the third terminal 34, and is spaced apart apart from the third terminal 34. In the X-axis direction, the fourth terminal 35 is located between the third terminal 34 and the third connection wall 113, and is spaced apart apart from the third connection wall 113. In the Y-axis direction, the fourth terminal 35 is located between the power distribution device 31 and the spacer plate 116, and is spaced apart apart from the spacer plate 116.

The fifth terminal 36 is fastened to the first mating surface 1111 of the first connection wall 111. Specifically, the fifth terminal 36 is accommodated in the first accommodating groove 118, and is fastened to the mating groove surface of the first accommodating groove 118. In the Y-axis direction, the fifth terminal 36 is located between the power distribution device 31 and the spacer plate 116, and is spaced apart apart from the power distribution device 31 and the spacer plate 116. In the X-axis direction, the fifth terminal 36 is located between the baffle plate 117 and the third terminal 34, and is spaced apart apart from the baffle plate 117 and the third terminal 34.

For structures and connection relationships of the charging component 40 and the cooling component 50, refer to related descriptions in the embodiment shown in FIG. 3. Therefore, details are not described again. The cooling component 50 includes the auxiliary power supply 53. The auxiliary power supply 53 is fixedly accommodated in the fourth mounting hole 127 of the cover plate 12, and is electrically connected to the control circuit board 20. When the cover plate 12 rotates relative to the main housing 11 to the closed state, that is, when the cover plate 12 covers the first accommodating groove 118 to form the first accommodating cavity, the auxiliary power supply 53 is accommodated in the first accommodating cavity.

The auxiliary component 60 includes the heat dissipation member 61, the display member 62, the card reader 63, and the electricity meter 64. The heat dissipation member 61 is fastened to the first connection wall 111. The heat dissipation member 61 is fastened to the first mating surface 1111 of the first connection wall 111. Specifically, the heat dissipation member 61 is accommodated in the first accommodating groove 118, and is fastened to the mating groove surface of the first accommodating groove 118. In the Y-axis direction, the heat dissipation member 61 is located between the power distribution device 31 and the fifth terminal 36, and is spaced apart apart from the power distribution device 31 and the fifth terminal 36. In the X-axis direction, the heat dissipation member 61 is located between the baffle plate 117 and the third terminal 34, and is spaced apart apart from the baffle plate 117 and the third terminal 34. The heat dissipation member 61 is electrically connected to the control circuit board 20 and the auxiliary power supply 53. For example, the heat dissipation member 61 is a fan. It may be understood that, in the first direction (Y-axis direction), the heat dissipation member 61 is located on a side that is of the power distribution device 31 and that faces the second accommodating groove 119. In the second direction (X-axis direction), the heat dissipation member 61 is located on a side that is of the baffle plate 117 and that faces the power distribution device 31, and is spaced apart apart from the baffle plate 117.

The display member 62 is fixedly accommodated in the first mounting hole 124, and is electrically connected to the control circuit board 20 and the auxiliary power supply 53. The card reader 63 is fixedly accommodated in the second mounting hole 125, and is electrically connected to the control circuit board 20 and the auxiliary power supply 53. The electricity meter 64 is fixedly accommodated in the third mounting hole 126, and is electrically connected to the control circuit board 20 and the auxiliary power supply 53. When the cover plate 12 rotates relative to the main housing 11 to the closed state, that is, when the cover plate 12 covers the first accommodating groove 118 to form the first accommodating cavity, the display member 62, the card reader 63, and the electricity meter 64 are all accommodated in the first accommodating cavity.

A structure of the terminal device 100 shown in this embodiment is similar to the structure of the terminal device 100 shown in FIG. 3. A difference between the terminal device 100 shown in this embodiment and the terminal device 100 shown in FIG. 3 lies in that the heat dissipation member 61 of the auxiliary component 60 is disposed at different positions. In this embodiment, the heat dissipation member 61 is fastened to the first mating surface 1111 of the first connection wall 111. Specifically, the heat dissipation member 61 is accommodated in the first accommodating groove 118, and is fastened to the mating groove surface of the first accommodating groove 118. In the Y-axis direction, the heat dissipation member 61 is located between the power distribution device 31 and the fifth terminal 36, and is spaced apart apart from the power distribution device 31 and the fifth terminal 36. In the X-axis direction, the heat dissipation member 61 is located between the baffle plate 117 and the third terminal 34, and is spaced apart apart from the baffle plate 117 and the third terminal 34.

Because the heat dissipation member 61 is fastened to the mating groove surface of the first accommodating groove 118, and the heat dissipation member 61 is accommodated in the first accommodating groove 118 of the main housing 11, the heat dissipation member 61 can be raised. When the external environment changes (for example, when the flood disaster occurs), the risk of the short circuit of the heat dissipation member 61 can be delayed. This helps improve the use safety of the terminal device 100, helps improve the environmental weather resistance of the terminal device 100, and helps prolong the service life of the terminal device 100. In addition, heat dissipation may be synchronously performed for the power distribution device 31, the third terminal 34, the fourth terminal 35, and the fifth terminal 36 via the heat dissipation member 61. This helps eliminate a local hot spot of an internal component of the terminal device 100, facilitates even heat dissipation for the terminal device 100, and ensures an even temperature inside the terminal device 100.

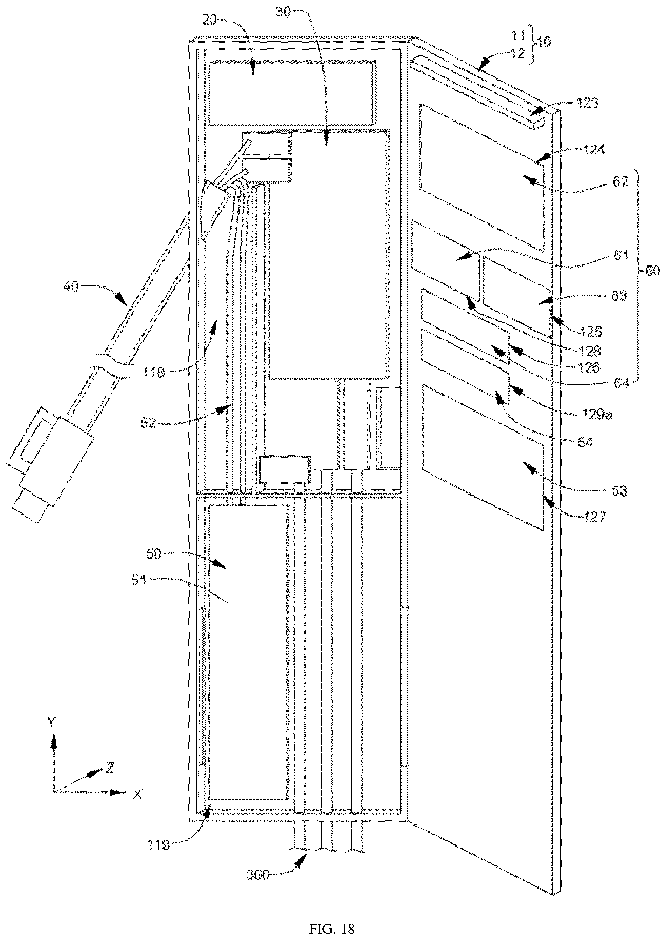

Refer to FIG. 18 with reference to FIG. 1, FIG. 3, and FIG. 10. FIG. 18 is a diagram of a three-dimensional structure of the terminal device 100 shown in FIG. 2 in an open state in a case of the terminal device being in cooperation with the cable component 300 according to another embodiment.

As shown in FIG. 1 and FIG. 18, in some embodiments, the terminal device 100 includes the housing 10, the control circuit board 20, the power distribution component 30, the charging component 40, the cooling component 50, and the auxiliary component 60. The control circuit board 20 is accommodated in the housing 10. The power distribution component 30 is accommodated in the housing 10, and is electrically connected to the control circuit board 20. The charging component 40 penetrates into the housing 10, and is connected to the power distribution component 30. The cooling component 50 is accommodated in the housing 10, and is electrically connected to the control circuit board 20. The cooling component 50 is fastened to the charging component 40, and the cooling component 50 is configured to perform heat dissipation for the charging component 40 and the power distribution component 30. The auxiliary component 60 is accommodated in the housing 10, and is electrically connected to the control circuit board 20. The cable component 300 penetrates into the housing 10, and is accommodated in the housing 10 and connected to the power distribution component 30. The charging component 40 is connected to the electric vehicle 2000.

As shown in FIG. 3, FIG. 10, and FIG. 18, the housing 10 includes the main housing 11 and the cover plate 12, and the cover plate 12 is rotatably connected to a side of the main housing 11. The cover plate 12 may rotate relative to the main housing 11, so that the housing 10 can switch between the open state and the closed state. Correspondingly, the terminal device 100 switches between the open state and the closed state. For details, refer to the related descriptions of the housing 10 in the embodiment shown in FIG. 3. Therefore, details are not described again.

The main housing 11 includes the first accommodating groove 118 and the second accommodating groove 119, and the first accommodating groove 118 and the second accommodating groove 119 are sequentially spaced apart in the Y-axis negative direction. For details, refer to the related descriptions of the main housing 11 in the embodiment shown in FIG. 3. Therefore, details are not described again. The cover plate 12 includes the first mounting surface 121. When the cover plate 12 rotates relative to the main housing 11 to the closed state, the first mounting surface 121 faces the main housing 11. The cover plate 12 is provided with the boss 123, the first mounting hole 124, the second mounting hole 125, the third mounting hole 126, the fourth mounting hole 127, and the fifth mounting hole 128. For structures and position relationships of the boss 123, the first mounting hole 124, the second mounting hole 125, the third mounting hole 126, the fourth mounting hole 127, and the fifth mounting hole 128, refer to related descriptions of the cover plate 12 in the embodiment shown in FIG. 3. Therefore, details are not described again.

A structure of the cover plate 12 of the terminal device 100 shown in this embodiment is similar to the structure of the cover plate 12 of the terminal device 100 shown in FIG. 3. A difference between the cover plate 12 of the terminal device 100 shown in this embodiment and the cover plate 12 of the terminal device 100 shown in FIG. 3 lies in that the cover plate 12 shown in this embodiment is further provided with a seventh mounting hole 129a. In the Y-axis direction, the seventh mounting hole 129a is located between the third mounting hole 126 and the fourth mounting hole 127, and is spaced apart apart from the third mounting hole 126 and the fourth mounting hole 127. The seventh mounting hole 129a extends in the thickness direction of the cover plate 12 and has an opening. The opening is located on the first mounting surface 121. When the cover plate 12 rotates relative to the main housing 11 to the closed state, that is, when the cover plate 12 covers the first accommodating groove 118 to form the first accommodating cavity, orthographic projection that is of the seventh mounting hole 129a and that is on the main housing 11 is located in the first accommodating groove 118.

For structures and connection relationships of the control circuit board 20, the power distribution component 30, and the charging component 40, refer to related descriptions in the embodiment shown in FIG. 3. Therefore, details are not described again. The cooling component 50 includes the cooling source 51, the cooling hose 52, and the auxiliary power supply 53. The cooling source 51 includes the water tank 517, the water pump 517a, the heat exchanger 518, the fan 519, and the control unit 519a. The water pump 517a, the heat exchanger 518, and the fan 519 are all electrically connected to the control unit 519a. The water pump 517a is fastened to the water tank 517. The heat exchanger 518 is connected to the water tank 517 and the water pump 517a. The water tank 517 and the heat exchanger 518 are fastened to the cooling hose 52. The auxiliary power supply 53 is fixedly accommodated in the fourth mounting hole 127 of the cover plate 12, and the auxiliary power supply 53 is electrically connected to the control unit 519a of the cooling source 51 and the control circuit board 20.

The cooling component 50 further includes an auxiliary circuit board 54. The auxiliary circuit board 54 is fastened to the cover plate 12, and is electrically connected to the cooling source 51 and the auxiliary power supply 53. Specifically, the auxiliary circuit board 54 is fixedly accommodated in the seventh mounting hole 129a of the cover plate 12, and is electrically connected to the control unit 519a of the cooling source 51 and the auxiliary power supply 53. The auxiliary power supply 53 is electrically connected to the control unit 519a of the cooling source 51 via the auxiliary circuit board 54.

The auxiliary component 60 includes the heat dissipation member 61, the display member 62, the card reader 63, and the electricity meter 64. The heat dissipation member 61, the display member 62, the card reader 63, and the electricity meter 64 are all fastened to the cover plate 12, and are all electrically connected to the auxiliary power supply 53 and the control circuit board 20. Specifically, the heat dissipation member 61 is fixedly accommodated in the fifth mounting hole 128, the display member 62 is fixedly accommodated in the first mounting hole 124, the card reader 63 is fixedly accommodated in the second mounting hole 125, and the electricity meter 64 is fixedly accommodated in the third mounting hole 126. When the cover plate 12 rotates relative to the main housing 11 to the closed state, that is, when the cover plate 12 covers the first accommodating groove 118 to form the first accommodating cavity, the auxiliary power supply 53, the heat dissipation member 61, the display member 62, the card reader 63, and the electricity meter 64 are all accommodated in the first accommodating cavity.

It may be understood that, in the Y-axis direction, the auxiliary circuit board 54 is located between the auxiliary power supply 53 and the electricity meter 64, and is spaced apart apart from the auxiliary power supply 53 and the electricity meter 64. In some other embodiments, the auxiliary circuit board 54 may alternatively be located between the display member 62 and the card reader 63 in the Y-axis direction, or may be located between the card reader 63 and the electricity meter 64. The auxiliary circuit board 54 may be disposed at different positions of the cover plate 12. This is not specifically limited in this application.

A structure of the terminal device 100 shown in this embodiment is similar to the structure of the terminal device 100 shown in FIG. 3. A difference between the terminal device 100 shown in this embodiment and the terminal device 100 shown in FIG. 3 lies in that the cooling component 50 shown in this embodiment further includes the auxiliary circuit board 54. The auxiliary circuit board 54 is fixedly accommodated in the seventh mounting hole 129a of the cover plate 12, and is electrically connected to the cooling source 51 and the auxiliary power supply 53. The auxiliary power supply 53 may be electrically connected to the cooling source 51 via the auxiliary circuit board 54, and the auxiliary circuit board 54 may be configured to control the cooling source 51 to work. Because the auxiliary circuit board 54 is fastened to the cover plate 12, a design of the auxiliary circuit board 54 not only facilitates the miniaturization design of the cooling source 51, but also prevents the auxiliary circuit board 54 from occupying the space of the main housing 11, thereby greatly improving the space utilization of the housing 10, and facilitating the miniaturization designs of the housing 10 and the terminal device 100.

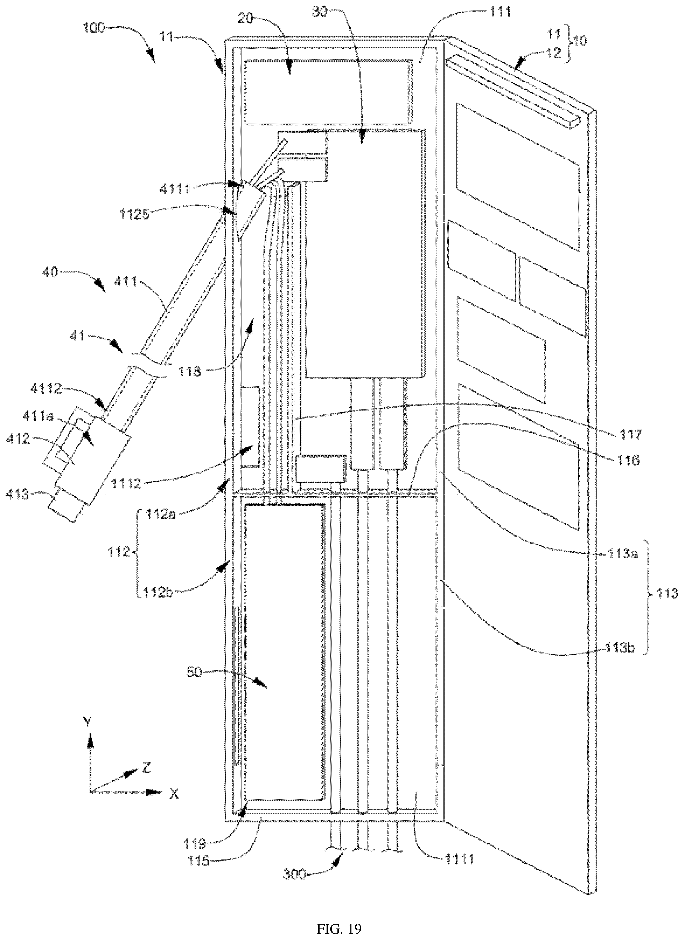

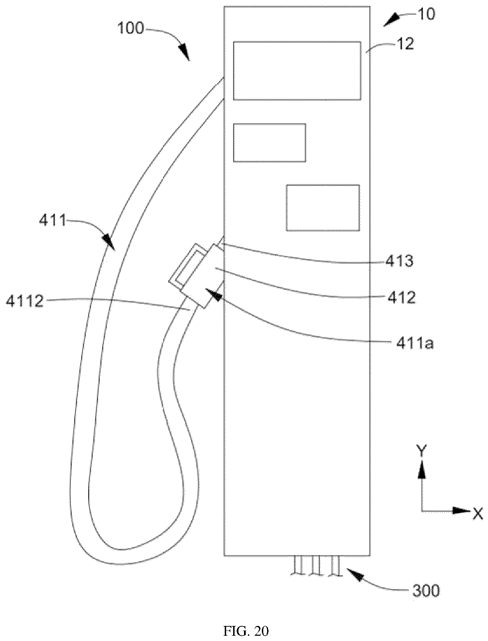

Refer to FIG. 19 and FIG. 20 with reference to FIG. 1, FIG. 2, and FIG. 3. FIG. 19 is a diagram of a three-dimensional structure of the terminal device 100 shown in FIG. 3 in an open state in a case of the terminal device being in cooperation with the cable component 300 according to another embodiment. FIG. 20 is a diagram of a structure of the terminal device 100 shown in FIG. 19 in a closed state in a case of the terminal device being in cooperation with the cable component 300.

As shown in FIG. 1 and FIG. 19, in some embodiments, the terminal device 100 includes the housing 10, the control circuit board 20, the power distribution component 30, the charging component 40, the cooling component 50, and the auxiliary component 60. The control circuit board 20 is accommodated in the housing 10. The power distribution component 30 is accommodated in the housing 10, and is electrically connected to the control circuit board 20. The charging component 40 penetrates into the housing 10, and is connected to the power distribution component 30. The cooling component 50 is accommodated in the housing 10, and is electrically connected to the control circuit board 20. The cooling component 50 is fastened to the charging component 40, and the cooling component 50 is configured to perform heat dissipation for the charging component 40 and the power distribution component 30. The auxiliary component 60 is accommodated in the housing 10, and is electrically connected to the control circuit board 20. The cable component 300 penetrates into the housing 10, and is accommodated in the housing 10 and connected to the power distribution component 30. The charging component 40 is connected to the electric vehicle 2000.

As shown in FIG. 3, FIG. 19, and FIG. 20, the housing 10 includes the main housing 11 and the cover plate 12, and the cover plate 12 is rotatably connected to a side of the main housing 11. The cover plate 12 may rotate relative to the main housing 11, so that the housing 10 can switch between the open state and the closed state. Correspondingly, the terminal device 100 switches between the open state and the closed state. For details, refer to the related descriptions of the housing 10 in the embodiment shown in FIG. 3. Therefore, details are not described again.

The main housing 11 includes the first connection wall 111, the second connection wall 112, the third connection wall 113, the fourth connection wall 114, the fifth connection wall 115, the spacer plate 116, and the baffle plate 117. The first connection wall 111 includes the first mating surface 1111. The second connection wall 112, the third connection wall 113, the fourth connection wall 114, the fifth connection wall 115, the spacer plate 116, and the baffle plate 117 are all fastened to the first mating surface 1111 of the first connection wall 111. The second connection wall 112 includes the first portion 112a and the second portion 112b. The third connection wall 113 includes the third portion 113a and the fourth portion 113b. The first connection wall 111, the first portion 112a, the fourth connection wall 114, the third portion 113a, and the spacer plate 116 are enclosed to form the first accommodating groove 118. The first connection wall 111, the second portion 112b, the fifth connection wall 115, the fourth portion 113b of the third connection wall 113, and the spacer plate 116 are enclosed to form the second accommodating groove 119. The first accommodating groove 118 and the second accommodating groove 119 are sequentially spaced apart in the Y-axis negative direction. The baffle plate 117 is fastened to the spacer plate 116, and is located in the first accommodating groove 118. The first accommodating groove 118 includes the mating groove surface. For a structure and a connection relationship of the foregoing feature, refer to the related descriptions in the embodiment shown in FIG. 3. Therefore, details are not described again.

The first connection wall 111 is provided with the mounting groove 1112. The mounting groove 1112 is concavely disposed on the first mating surface 1111 of the first connection wall 111. Specifically, the mounting groove 1112 is concavely disposed on the mating groove surface of the first accommodating groove 118. The mounting groove 1112 is located in the first accommodating groove 118, is located on a side that is of the baffle plate 117 and that faces away from the third connection wall 113, and is spaced apart apart from the baffle plate 117. The mounting groove 1112 extends, in the X-axis direction, in a direction that faces away from the baffle plate 117 and has an opening, and the opening is located on a surface that is of the first connection wall 111 and that is in an X-axis negative direction. It may be understood that the first connection wall 111 and the third portion 113a of the third connection wall 113 are enclosed to form the mounting opening, the mounting opening is in communication with the mounting groove 1112, and the external component may be accommodated in the mounting groove 1112 through the mounting opening.

The first portion 112a of the second connection wall 112 is provided with the through hole 1125, and the through hole 1125 is in communication with the first accommodating groove 118. For details, refer to the related descriptions in the embodiment shown in FIG. 3. Therefore, details are not described again. In the Y-axis direction, the through hole 1125 is located on a side that is of the mounting groove 1112 and that faces away from the spacer plate 116, and is spaced apart apart from the mounting groove 1112.

A structure of the main housing 11 of the terminal device 100 shown in this embodiment is similar to a structure of the main housing 11 of the terminal device 100 shown in FIG. 3. A difference between the main housing 11 of the terminal device 100 shown in this embodiment and the main housing 11 of the terminal device 100 shown in FIG. 3 lies in that the mounting groove 1112 is disposed at different positions. Specifically, the mounting groove 1112 of the main housing 11 shown in this embodiment is located in the first accommodating groove 118, is located on a side that is of the baffle plate 117 and that faces away from the third connection wall 113, and is spaced apart apart from the baffle plate 117.

The cover plate 12 is rotatably connected to the third connection wall 113. For a specific structure of the cover plate 12, refer to the related descriptions of the cover plate 12 in the embodiment shown in FIG. 3. Therefore, details are not described again. For structures and connection relationships of the control circuit board 20 and the power distribution component 30, refer to related descriptions in the embodiment shown in FIG. 3. Therefore, details are not described again.

For the structure and the connection relationship of the charging component 40, refer to related descriptions in the embodiment shown in FIG. 3. Therefore, details are not described again. The charging component 40 includes the connector 41, and the connector 41 includes the accommodating hose 411 and the connector base 411a. The accommodating hose 411 is located at the end of the connector base 411a, and is connected to the connector base 411a. The accommodating hose 411 includes the first connection section 4111 and the second connection section 4112. The connector base 411a includes the main body part 412 and the connector part 413, and the main body part 412 is connected to the second connection section 4112. The connector part 413 is located at an end that is of the main body part 412 and that faces away from the accommodating hose 411, and is connected to the main body part 412. The first connection section 4111 of the accommodating hose 411 passes through the through hole 1125 from the outside of the main housing 11 to the first accommodating groove 118. The first connection section 4111 of the accommodating hose 411 passes through and is mounted on the through hole 1125 fixedly. The second connection section 4112 of the accommodating hose 411 and the connector base 411a are both located outside the main housing 11. The connector part 413 of the connector base 411a is configured to connect to the electric vehicle 2000 (as shown in FIG. 1).

When the electric vehicle 2000 no longer needs to be charged by the power unit device 200 via the terminal device 100, that is, when the connector part 413 of the connector base 411a of the connector 41 is not connected to the electric vehicle 2000, a part of the main body part 412 and a part of the connector part 413 may penetrate into the first accommodating groove 118 of the main housing 11 from a side that is of the second connection wall 112 of the main housing 11 and that faces away from the third connection wall 113, and are partially accommodated in the mounting groove 1112. For structures and connection relationships of the cooling component 50 and the auxiliary component 60, refer to related descriptions in the embodiment shown in FIG. 3. Therefore, details are not described again.

As shown in FIG. 2, FIG. 19, and FIG. 20, a structure of the terminal device 100 shown in this embodiment is similar to the structure of the terminal device 100 shown in FIG. 3. A difference between the terminal device 100 shown in this embodiment and the terminal device 100 shown in FIG. 3 lies in that, in this embodiment, when the electric vehicle 2000 no longer needs to be charged by the power unit device 200 via the terminal device 100, the connector base 411a may be mounted on a side that is of the main housing 11 and that is provided with the through hole 1125. To be specific, in the X-axis direction, the first connection section 4111 of the accommodating hose 411, the second connection section 4112 of the accommodating hose 411, and the connector base 411a are located on a side of the housing 10, and the accommodating hose 411 is no longer wound around the housing 10. In this way, on one hand, this is convenient for an operator to hold the connector base 411a to connect to the electric vehicle 2000. On the other hand, this avoids that the accommodating hose 411 interferes with rotation of the cover plate 12 relative to the main housing 11, that is, prevents the accommodating hose 411 from interfering with opening or closing of the housing 10, thereby facilitating maintenance and repair of the terminal device 100 by the user.

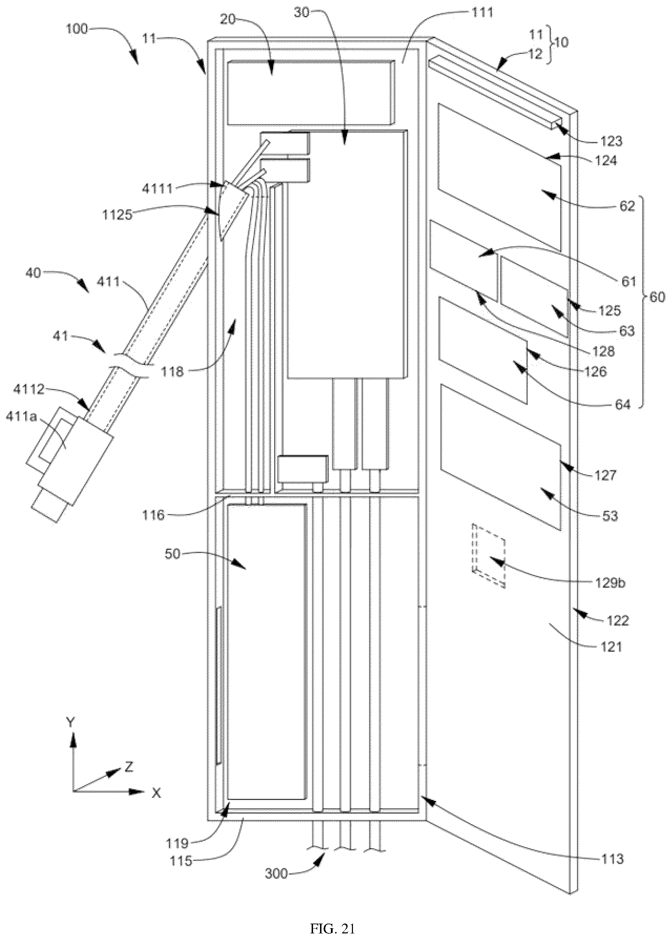

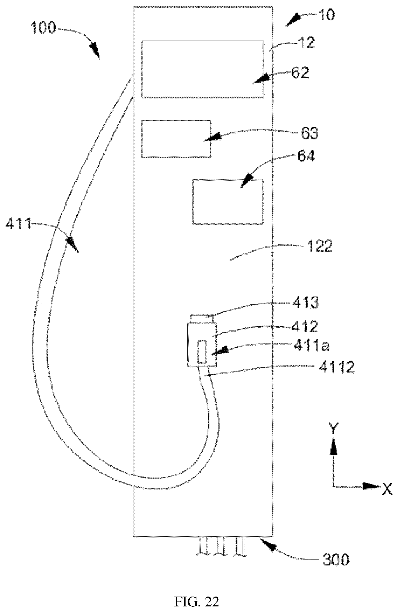

Refer to FIG. 21 and FIG. 22 with reference to FIG. 1, FIG. 2, and FIG. 3. FIG. 21 is a diagram of a three-dimensional structure of the terminal device 100 shown in FIG. 3 in an open state in a case of the terminal device being in cooperation with the cable component 300 according to still another embodiment. FIG. 22 is a diagram of a structure of the terminal device 100 shown in FIG. 21 in a closed state in a case of the terminal device being in cooperation with the cable component 300.

As shown in FIG. 1 and FIG. 21, in some embodiments, the terminal device 100 includes the housing 10, the control circuit board 20, the power distribution component 30, the charging component 40, the cooling component 50, and the auxiliary component 60. The control circuit board 20 is accommodated in the housing 10. The power distribution component 30 is accommodated in the housing 10, and is electrically connected to the control circuit board 20. The charging component 40 penetrates into the housing 10, and is connected to the power distribution component 30. The cooling component 50 is accommodated in the housing 10, and is electrically connected to the control circuit board 20. The cooling component 50 is fastened to the charging component 40, and the cooling component 50 is configured to perform heat dissipation for the charging component 40 and the power distribution component 30. The auxiliary component 60 is accommodated in the housing 10, and is electrically connected to the control circuit board 20. The cable component 300 penetrates into the housing 10, and is accommodated in the housing 10 and connected to the power distribution component 30. The charging component 40 is connected to the electric vehicle 2000.

As shown in FIG. 3, FIG. 21, and FIG. 22, the housing 10 includes the main housing 11 and the cover plate 12, and the cover plate 12 is rotatably connected to a side of the main housing 11. The cover plate 12 may rotate relative to the main housing 11, so that the housing 10 can switch between the open state and the closed state. Correspondingly, the terminal device 100 switches between the open state and the closed state. For details, refer to the related descriptions of the housing 10 in the embodiment shown in FIG. 3. Therefore, details are not described again.

The main housing 11 includes the first connection wall 111, the second connection wall 112, the third connection wall 113, the fourth connection wall 114, the fifth connection wall 115, and the spacer plate 116. The first connection wall 111, the second connection wall 112, the fourth connection wall 114, the third connection wall, and the spacer plate 116 are enclosed to form the first accommodating groove 118. The first connection wall 111, the second connection wall 112, the fifth connection wall 115, the third connection wall 113, and the spacer plate 116 are enclosed to form the second accommodating groove 119. The first accommodating groove 118 and the second accommodating groove 119 are sequentially spaced apart in the Y-axis negative direction. The second connection wall 112 is provided with the through hole 1125, and the through hole 1125 is in communication with the first accommodating groove 118. For a structure and a connection relationship of the foregoing feature, refer to the related descriptions in the embodiment shown in FIG. 3. Therefore, details are not described again.

A structure of the main housing 11 of the terminal device 100 shown in this embodiment is similar to a structure of the main housing 11 of the terminal device 100 shown in FIG. 3. A difference between the main housing 11 of the terminal device 100 shown in this embodiment and the main housing 11 of the terminal device 100 shown in FIG. 3 lies in that the mounting groove 1112 is omitted from the main housing 11 of the terminal device 100.

The cover plate 12 is rotatably connected to the third connection wall 113. The cover plate 12 includes the first mounting surface 121 and the second mounting surface 122. The first mounting surface 121 and the second mounting surface 122 are disposed back to back in the thickness direction of the cover plate 12. When the cover plate 12 rotates relative to the main housing 11 to the closed state, the first mounting surface 121 faces the main housing 11, and the second mounting surface 122 faces away from the main housing 11. The cover plate 12 is provided with the boss 123, the first mounting hole 124, the second mounting hole 125, the third mounting hole 126, the fourth mounting hole 127, and the fifth mounting hole 128. For structures and position relationships of the boss 123, the first mounting hole 124, the second mounting hole 125, the third mounting hole 126, the fourth mounting hole 127, and the fifth mounting hole 128, refer to related descriptions of the cover plate 12 in the embodiment shown in FIG. 3. Therefore, details are not described again.

A structure of the cover plate 12 of the terminal device 100 shown in this embodiment is similar to the structure of the cover plate 12 of the terminal device 100 shown in FIG. 3. A difference between the cover plate 12 of the terminal device 100 shown in this embodiment and the cover plate 12 of the terminal device 100 shown in FIG. 3 lies in that the cover plate 12 shown in this embodiment is further provided with a connector base mounting hole 129b. In the Y-axis direction, the connector base mounting hole 129b is located on a side that is of the fourth mounting hole 127 and that faces away from the third mounting hole 126, and is spaced apart apart from the fourth mounting hole 127. The connector base mounting hole 129b extends in the thickness direction of the cover plate 12 and has an opening. The opening is located on the second mounting surface 122. When the cover plate 12 rotates relative to the main housing 11 to the closed state, that is, when the cover plate 12 covers the second accommodating groove 119 to form the second accommodating cavity, orthographic projection that is of the connector base mounting hole 129b and that is on the main housing 11 is located in the second accommodating groove 119. In some other embodiments, the orthographic projection of the connector base mounting hole 129b on the main housing 11 may alternatively be located in the first accommodating groove 118. This is not specifically limited in this application.

For structures and connection relationships of the control circuit board 20, the power distribution component 30, and the charging component 40, refer to related descriptions in the embodiment shown in FIG. 3. Therefore, details are not described again. The charging component 40 includes the connector 41, and the connector 41 includes the accommodating hose 411 and the connector base 411a. The accommodating hose 411 is located at the end of the connector base 411a, and is connected to the connector base 411a. The accommodating hose 411 includes the first connection section 4111 and the second connection section 4112. The connector base 411a includes the main body part 412 and the connector part 413, and the main body part 412 is connected to the second connection section 4112. The connector part 413 is located at an end that is of the main body part 412 and that faces away from the accommodating hose 411, and is connected to the main body part 412. The first connection section 4111 of the accommodating hose 411 passes through the through hole 1125 from the outside of the main housing 11 to the first accommodating groove 118. The first connection section 4111 of the accommodating hose 411 passes through and is mounted on the through hole 1125 fixedly. The second connection section 4112 of the accommodating hose 411 and the connector base 411a are both located outside the main housing 11. The connector part 413 of the connector base 411a is configured to connect to the electric vehicle 2000 (as shown in FIG. 1).

When the electric vehicle 2000 no longer needs to be charged by the power unit device 200 via the terminal device 100, that is, when the connector part 413 of the connector base 411a of the connector 41 is not connected to the electric vehicle 2000, a part of the main body part 412 and a part of the connector part 413 may penetrate into the connector base mounting hole 129b of the cover plate 12 from a side that is of the second mounting surface 122 of the cover plate 12 and that faces away from the first mounting surface 121, and are partially accommodated in the connector base mounting hole 129b. It may be understood that the connector base 411a may be mounted on the cover plate 12.

For structures and connection relationships of the cooling component 50 and the auxiliary component 60, refer to related descriptions in the embodiment shown in FIG. 3. Therefore, details are not described again. The cooling component 50 includes the auxiliary power supply 53. The auxiliary power supply 53 is fixedly accommodated in the fourth mounting hole 127 of the cover plate 12, and is electrically connected to the control circuit board 20. When the cover plate 12 rotates relative to the main housing 11 to the closed state, that is, when the cover plate 12 covers the first accommodating groove 118 to form the first accommodating cavity, the auxiliary power supply 53 is accommodated in the first accommodating cavity.

The auxiliary component 60 includes the heat dissipation member 61, the display member 62, the card reader 63, and the electricity meter 64. The heat dissipation member 61 is fixedly accommodated in the fifth mounting hole 128, and is electrically connected to the auxiliary power supply 53 and the control circuit board 20. The display member 62 is fixedly accommodated in the first mounting hole 124, and is electrically connected to the control circuit board 20 and the auxiliary power supply 53. The card reader 63 is fixedly accommodated in the second mounting hole 125, and is electrically connected to the control circuit board 20 and the auxiliary power supply 53. The electricity meter 64 is fixedly accommodated in the third mounting hole 126, and is electrically connected to the control circuit board 20 and the auxiliary power supply 53. When the cover plate 12 rotates relative to the main housing 11 to the closed state, that is, when the cover plate 12 covers the first accommodating groove 118 to form the first accommodating cavity, the heat dissipation member 61, the display member 62, the card reader 63, and the electricity meter 64 are all accommodated in the first accommodating cavity.

As shown in FIG. 2, FIG. 21, and FIG. 22, a structure of the terminal device 100 shown in this embodiment is similar to the structure of the terminal device 100 shown in FIG. 3. A difference between the terminal device 100 shown in this embodiment and the terminal device 100 shown in FIG. 3 lies in that, in this embodiment, when the electric vehicle 2000 no longer needs to be charged by the power unit device 200 via the terminal device 100, the connector base 411a may be mounted on the cover plate 12. Therefore, in the X-axis direction, the first connection section 4111 of the accommodating hose 411, the second connection section 4112 of the accommodating hose 411, and the connector base 411a are located on adjacent sides of the housing 10, and the accommodating hose 411 is not wound around the housing 10. In this way, on one hand, this is convenient for an operator to hold the connector base 411a to connect to the electric vehicle 2000. On the other hand, this helps reduce a contact area between the accommodating hose 411 and the ground, avoids severe wear of the accommodating hose 411, helps prolong the service life of the accommodating hose 411, and further helps prolong the service life of the connector 41.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A terminal device, wherein the terminal device comprises:
a housing, wherein the housing comprises a first accommodating cavity and a second accommodating cavity, and the first accommodating cavity and the second accommodating cavity are sequentially arranged in a first direction and spaced apart;
a power distribution device, wherein the power distribution device is accommodated in the first accommodating cavity;
a charging component, wherein the charging component comprises a connector, the connector is partially located outside the housing, partially inserted into the first accommodating cavity, and electrically connected to the power distribution device; and
a cooling component, wherein the cooling component comprises a cooling source and a cooling hose, the cooling source is accommodated in the second accommodating cavity, the cooling hose comprises a first section, a second section, and a middle section, the middle section is connected between the first section and the second section, both an end of the first section and an end of the second section are fastened to the cooling source and penetrate into the second accommodating cavity from the first accommodating cavity, and the middle section extends into the connector.

2. The terminal device according to claim 1, wherein the housing is provided with a through hole, the through hole is in communication with the first accommodating cavity, a hole axis of the through hole extends in a second direction, the connector comprises a first connection section, the first connection section passes through the through hole, and the cooling hose extends into the connector from an end face of the first connection section, wherein the second direction is perpendicular to the first direction.

3. The terminal device according to claim 2, wherein the housing is provided with a baffle plate, the baffle plate is disposed in the first accommodating cavity, and in the second direction, the baffle plate is located between the power distribution device and the cooling hose.

4. The terminal device according to claim 3, wherein the terminal device comprises a first terminal and a second terminal, both the first terminal and the second terminal are connected to the power distribution device, the first terminal and the second terminal are accommodated in the first accommodating cavity, in the first direction, the first terminal and the second terminal are spaced apart and are both located on a side that is of the baffle plate and that faces away from the second accommodating cavity, a first power cable and a second power cable are disposed in the connector, both the first power cable and the second power cable extend out from the end face of the first connection section, the first power cable is connected to the first terminal, and the second power cable is connected to the second terminal.

5. The terminal device according to claim 3, wherein the housing comprises a main housing and a cover plate, the cover plate is rotatably connected to a side of the main housing, the main housing comprises a first accommodating groove and a second accommodating groove, the first accommodating groove and the second accommodating groove are spaced apart in the first direction, the cover plate and the main housing are able to be stacked in a third direction, the cover plate covers the first accommodating groove to form the first accommodating cavity, and the cover plate covers the second accommodating groove to form the second accommodating cavity, wherein the third direction is perpendicular to the first direction and the second direction.

6. The terminal device according to claim 5, wherein the main housing is provided with a first air vent and a second air vent; and in the second direction, the first air vent and the second air vent are spaced apart and opposite to each other, and are both in communication with the second accommodating groove, wherein hole axes of both the first air vent and the second air vent extend in the second direction.

7. The terminal device according to claim 6, wherein the main housing is provided with a third air vent, and a hole axis of the third air vent extends in the third direction and is in communication with the second accommodating groove.

8. The terminal device according to claim 5, wherein the main housing is provided with a third air vent, the cover plate is provided with a fourth air vent, a hole axis of the third air vent extends in the third direction and is in communication with the second accommodating groove, in the third direction, the fourth air vent and the third air vent are able to be spaced apart and opposite to each other, and a hole axis of the fourth air vent extends in the third direction and is in communication with the second accommodating cavity.

9. The terminal device according to claim 5, wherein the first accommodating groove comprises a mating groove surface, the power distribution device is fastened to the mating groove surface, the terminal device comprises a heat dissipation member, and the heat dissipation member is accommodated in the first accommodating cavity, and is spaced apart apart from the power distribution device.

10. The terminal device according to claim 9, wherein the heat dissipation member is fastened to the cover plate, and in the third direction, projection of the heat dissipation member accommodated in the first accommodating cavity overlaps projection of the power distribution device.

11. The terminal device according to claim 9, wherein the heat dissipation member is fastened to the mating groove surface, and in the first direction, the heat dissipation member is located on a side that is of the power distribution device and that faces away from the second accommodating groove.

12. The terminal device according to claim 9, wherein the baffle plate is disposed on the mating groove surface, the heat dissipation member is fastened to the mating groove surface, in the first direction, the heat dissipation member is located on a side that is of the power distribution device and that faces the second accommodating groove, and in the second direction, the heat dissipation member is located on a side that is of the baffle plate and that faces the power distribution device, and is spaced apart apart from the baffle plate.

13. The terminal device according to any one of claims 9 to 12, wherein the terminal device comprises a control circuit board, the control circuit board is electrically connected to the power distribution device, the cooling source, and the heat dissipation member, and the control circuit board is fastened to the mating groove surface, or
the control circuit board is fastened to the cover plate, and the control circuit board is accommodated in the first accommodating cavity.

14. The terminal device according to claim 13, wherein the cooling component comprises an auxiliary power supply, the auxiliary power supply is fastened to the cover plate, the auxiliary power supply is accommodated in the first accommodating cavity, and the auxiliary power supply is electrically connected to the cooling source, the control circuit board, and the heat dissipation member.

15. The terminal device according to claim 14, wherein the cooling component comprises an auxiliary circuit board, the auxiliary circuit board is fastened to the cover plate, the auxiliary circuit board is accommodated in the first accommodating cavity, and the auxiliary circuit board is electrically connected to the cooling source and the auxiliary power supply.

16. The terminal device according to any one of claims 5 to 15, wherein the connector comprises an accommodating hose and a connector base, the accommodating hose comprises the first connection section and a second connection section, the second connection section is fastened to the first connection section, and the connector base is connected to the second connection section.

17. The terminal device according to claim 16, wherein the main housing is provided with the through hole, the through hole is in communication with the first accommodating groove, in the second direction, the first connection section that passes through the through hole is mounted on one side of the main housing, and the connector base is mounted on the other side of the main housing;
the connector base is mounted on a side that is of the main housing and that is provided with the through hole; or
the connector base is mounted on the cover plate.

18. The terminal device according to any one of claims 1 to 17, wherein the terminal device comprises a third terminal, a fourth terminal, and a fifth terminal that are accommodated in the first accommodating cavity, both the third terminal and the fourth terminal are connected to the power distribution device, both the third terminal and the fourth terminal are located on a side that is of the power distribution device and that faces the second accommodating cavity, the fifth terminal is fastened to the housing, and the fifth terminal is located on a side that is of the power distribution device and that faces the third terminal and the fourth terminal, and is spaced apart apart from the power distribution device.

19. A power supply system, wherein the power supply system comprises a power unit device, a cable component, and the terminal device according to any one of claims 1 to 18, the cable component is connected to the power unit device and the power distribution component of the terminal device, and the power unit device is configured to provide a charging direct current for the terminal device.
